# EUROPÄISCHE PATENTSCHRIFT

(11) **EP 2 475 541 B1**
(45) Veröffentlichungstag und Bekanntmachung des Hinweises auf die Patenterteilung: **01.05.2013**
(21) Anmeldenummer: 10754467.8
(22) Anmeldetag: 10.09.2010
(51) Int. Cl.: B60K 15/03, B60K 15/04, B29C 41/04, B29C 41/20, B29C 45/14, B29C 49/20

(54) **BEHÄLTER ZUR AUFNAHME EINES KRAFT- UND/ODER BETRIEBSSTOFFES FÜR FAHRZEUGE**
CONTAINER FOR HOLDING FUEL AND / OR OPERATING SUPPLY FOR VEHICLES
CONTENEUR POUR RECEVOIR UN CARBURANT ET / OU MATIÈRES CONSOMMABLES POUR VÉHICULES

(30) Priorität: 11.09.2009 DE 102009029362
(43) Veröffentlichungstag der Anmeldung: 18.07.2012
(73) Patentinhaber: Erhard GmbH, 73529 Schwäbisch-Gmund (DE)
(72) Erfinder: FETZER, Horst, 73052 Eislingen (DE)
(74) Vertreter: Rausch, Gabriele
(86) Internationale Anmeldenummer: PCT/EP2010/063331
(87) Internationale Veröffentlichungsnummer: WO 2011/029912

(56) Entgegenhaltungen:
- WO-A1-2009/013558
- DE-A1-102006 054 208
- DE-A1-102008 049 150
- DE-U1-202005 011 575
- US-B1- 6 193 924

## Beschreibung

Die Erfindung betrifft einen Behälter zur Aufnahme eines Kraft-und/oder Betriebsstoffes für Fahrzeuge, insbesondere für Nutzfahrzeuge, mit einem Einfüllstutzen zur Aufnahme einer Zapfpistole gemäß dem Oberbegriff von Anspruch 1.

Die Erfindung betrifft ferner einen Kraftstofftank für Nutzfahrzeuge, mit wenigstens einem ersten Aufnahmeraum für einen Kraftstoff und einem zweiten Aufnahmeraum für einen zweiten Kraftstoff oder einen Betriebsstoff oder eine Betriebsstoffkomponente gemäß Anspruch 18.

Ein gattungsgemäßer Behälter zur Aufnahme eines Kraft- und/oder Betriebsstoffes ist aus der DE 202005011575 U1 bekannt.

Für den Betrieb von insbesondere mit Diesel-Kraftstoff betriebenen Nutzfahrzeugen ist zur Russreduktion die Verwendung von Harnstoff bzw. AdBlue vorgesehen. Der Harnstoff wird dabei im Allgemeinen in einem gesonderten Tank mitgeführt. Um Fehlbetankungen der für die Kraftstoffe vorgesehenen Tanks mit Harnstoff zu vermeiden, ist es üblich, die Zapfpistole mit einem speziellen Schließmechanismus zu versehen. Zu dessen Betätigung weist der für Harnstoff vorgesehene Tank angeschlossen an den Einfüllstutzen ein gesondertes Einsatzstück auf, welches in seiner Wandung einen Ringmagneten trägt. Eine in ihrer Formgebung auf die Innenform des Einsatzstückes abgestimmte Zapfpistole soll dabei so weit in den Einfüllstutzen und in das darin gehalterte Einsatzstück eingeführt werden, dass der Ringmagnet die Zapfpistole an einem Bereich umschließt, in welchem in der Zapfpistole der Schließmechanismus angeordnet ist. Der Schließmechanismus in der Zapfpistole wird ausschließlich durch die Einwirkung des Ringmagneten geöffnet und freigegeben. Auf diese Weise sollen Fehlbetankungen von Fluidtanks, die nicht mit einem zugeordneten Einsatzstück mit einem Ringmagneten versehen sind, mit Harnstoff sicher vermieden werden. Umgekehrt sollen Fehlbetankungen von Harnstoff-Tanks mit Kraftstoff dadurch vermieden werden, dass das Einsatzstück eine bestimmte Formgebung für die Zapfpistole bzw. den Rüssel der Zapfpistole erfordert, so dass die Zapfpistolen für die Kraftstoffbetankung nicht in das bei Harnstoff-Tanks vorgesehene Einsatzstück hineinpassen.

Eine derartige Lösung ist auch aus der Schrift, EP 1 502 794 A2 bekannt. Der aus der gattungsgemäßen Schrift bekannte Tank ist aus Kunststoff ausgebildet. Dabei weist der Kunststofftank im Bereich einer Einfüllöffnung einen Tankstutzen mit einem Halsansatz auf. Auf den Tankstutzen ist ein gesonderter Einfüllstutzen als Träger eines Verschlussdeckels befestigt. Des weiteren ist an dem Tankstutzen ein Fehlbetankungseinsatz gehaltert, welcher in seiner Wandung einen Ringmagneten hält. Der Fehlbetankungseinsatz wird mit dem Tankstutzen dadurch verbunden, dass der Fehlbetankungseinsatz an einem als Halterung dienenden Halsstück befestigt ist, welches mit einem umlaufenden Flansch auf dem oberen Rand des Tankstutzens auflagert und in den Tankstutzen hineinragt. Dabei wird der Flansch durch Schrauben mit dem oberen Rand des Tankstutzens verschraubt. Das Halsstück, an welchem der Fehlbetankungseinsatz befestigt ist, dient auch zur Befestigung des Einfüllstutzens mit dem Verschlussdeckel. Die Befestigung erfolgt dabei durch Punktschweißen.

Von Nachteil bei der EP 1 502 794 A2 ist der komplizierte, teileintensive Aufbau und der daraus resultierende hohe Fertigungs-und Montageaufwand.

Aus der gathugsgemäβen DE 20 2005 011 575 U1 ist ein Einfüllstutzen für einen Behälter aus Kunststoff zum Verhindern einer Fehlbefüllung des Behälters bekannt. Der Einfüllstutzen ist mit einem Verschlussdeckel verschließbar. In den Einfüllstutzen soll ein Kunststoffhalter für einen Permanentmagneten eingebracht werden. Dabei ist vorgesehen, dass der den Permanentmagneten aufnehmende Kunststoffhalter mit dem Einfüllstutzen unmittelbar flüssigkeitsdicht verbunden ist. Erreicht werden soll damit, dass in dem Einfüllstutzen lediglich ein einziges mit dem Permanentmagneten versehenes Bauelement angeordnet ist, welches als Einsatzteil zusammen mit dem Einfüllstutzen eine flüssigkeitsdichte Aufnahme des Permanentmagneten ermöglicht.

Durch die in der DE 20 2005 011 575 U1 dargestellte Lösung werden, verglichen mit der Lösung gemäß der EP 1 502 794 A2 zwar die notwendigen Bauteile reduziert, es ist jedoch immer noch ein verhältnismäßig hoher konstruktiver Aufwand notwendig. Ferner muss der Einfüllstutzen in einer in der DE 20 2005 011 575 U1 nicht näher beschriebenen Weise auf einen Behälter aus Kunststoff montiert, vorzugsweise verschweißt werden.

Der vorliegenden Erfindung liegt die Aufgabe zugrunde, einen Behälter zu schaffen, der geeignet ist, auf einen Schließmechanismus einer Zapfpistole einzuwirken und der einfach und mit wenigen Bauteilen herstellbar ist.

Der vorliegenden Erfindung liegt ferner die Aufgabe zugrunde, ein einfaches und kostengünstig durchführbares Verfahren zur Herstellung eines Behälters zur Aufnahme von Kraft- und/oder Betriebsstoffen zu schaffen.

Die erfindungsgemäße Aufgabe wird hinsichtlich des zu schaffenden Behälters durch Anspruch 1 gelöst.

Dadurch, dass der Behälter gemäß Anspruch 1 aus einem Kunststoff gebildet ist und einen einstückig mit dem Behälter ausgebildeten Einfüllstutzenhalter aufweist, in welchem der Einfüllstutzen eingeschrumpft ist, und dadurch, dass der Einfüllstutzen einen Ringraum ausbildet, in welchem der Magnet verliersicher aufgenommen ist, wird ein kostengünstig und prozesssicher herstellbarer Behälter geschaffen, der geeignet ist, einen Schließmechanismus einer Zapfpistole zu öffnen bzw. bei dem eine Fehlbetankung weitgehend vermieden wird. Im Vergleich zum Stand der Technik werden die benötigten Bauteile weiter reduziert. Durch das Einschrumpfen des Einfüllstutzens in den Einfüllstutzenhalter kann auf eine aufwändige Verschraubung und Verschweißung, so wie dies beispielsweise in der EP 1 502 794 A2 vorgeschlagen ist, verzichtet werden. Ein Verbinden des Einfüllstutzens mit dem Einfüllstutzenhalter durch ein Einschrumpfen hat zudem den Vorteil, dass eine belastbare und dichte Verbindung, insbesondere eine flüssigkeitsdichte Verbindung, zwischen dem Einfüllstutzen und dem Einfüllstutzenhalter geschaffen werden kann.

Durch das einstückige Ausformen des Einfüllstutzenhalters mit dem Behälter wird auf ein zusätzliches Bauteil verzichtet.

Der Einfüllstutzen, der in den Einfüllstutzenhalter eingeschrumpft wird, dient zum Einen zur Aufnahme einer Zapfpistole und zum Anderen zur Aufnahme eines Magneten, durch den die Zapfpistole freigeschaltet werden kann. Durch einen geeigneten Innendurchmesser und/oder eine geeignete Formgebung des Einfüllstutzens kann vermieden werden, dass Zapfpistolen für Flüssigkeiten, die nicht in den Behälter eingefüllt werden sollen, in den Einfüllstutzen hineinpassen.

Bei dem erfindungsgemäßen Behälter kann vorzugsweise vorgesehen sein, dass es sich um einen Behälter zur Aufnahme eines Harnstoffes oder eines AdBlues handelt. Zapfpistolen für derartige Betriebsstoffe sind regelmäßig kleiner im Durchmesser als Zapfpistolen für die herkömmliche Kraftstoffbetankung, beispielsweise für die Dieselbetankung.

Die Herstellung des Kunststoffbehälters mit dem einstückig ausgebildeten Einfüllstutzenhalter kann durch bekannte Verfahren erfolgen. Die Erfinder haben dabei erkannt, dass das Zusammenschrumpfen, üblicherweise um 3 %, des Kunststoffbehälters nach dessen Herstellung dazu genutzt werden kann, dass in den Einfüllstutzenhalter ein Einfüllstutzen eingeschrumpft wird. D. h. der Einfüllstutzen wird in den Einfüllstutzenhalter eingebracht, bevor der Einfüllstutzenhalter auf eine für den späteren Einsatz übliche Temperatur abgekühlt ist. Vorzugsweise wird der Einfüllstutzen in den Einfüllstutzenhalter eingebracht zu einem Zeitpunkt, bei dem die Temperatur des Einfüllstutzenhalters noch möglichst hoch ist.

Der Einfüllstutzen kann in einem Zustand in den Einfüllstutzenhalter eingepresst werden, in dem dieser noch heiß ist. Vorzugsweise erfolgt die Verbindung zwischen dem Einfüllstutzen und dem Einfüllstutzenhalter ohne eine zusätzliche Verbindungstechnik bzw. ohne zusätzliche Verbindungsmittel.

Der Einfüllstutzen kann aus einem beliebigen Material, beispielsweise Kunststoff, Metall, insbesondere Stahl oder Aluminium, gebildet sein. Besonders geeignet ist eine Ausgestaltung des Einfüllstutzenhalters aus einem Kunststoff. Die Herstellung kann dabei vorzugsweise durch ein Spritzgussverfahren erfolgen.

Alternativ oder ergänzend dazu, dass der Einfüllstutzen in den Einfüllstutzenhalter eingebracht wird, bevor der Einfüllstutzenhalter von einer "Herstellungstemperatur" auf eine spätere Betriebstemperatur abgekühlt ist, kann auch vorgesehen sein, dass der Einfüllstutzen in einem gekühlten Zustand, d. h. in einem Zustand, bei dem der Einfüllstutzen deutlich kühler ist als der Einfüllstutzenhalter, in diesen eingebracht wird. Dadurch, dass sich der Einfüllstutzen in der Folge erwärmt, dehnt sich dieser aus, wodurch ein Einschrumpfen in den Einfüllstutzenhalter erreicht bzw. zumindest unterstützt werden kann.

Dieses Verfahren ist unabhängig von der Materialwahl des Einfüllstutzens möglich, eignet sich jedoch besonders, wenn es sich um einen Einfüllstutzen aus Kunststoff handelt.

Der Einfüllstutzen kann an seinem Außenumfang, insbesondere in den Bereichen, die eine Innenwandung des Einfüllstutzenhalters kontaktieren, eine geeignete Struktur aufweisen. Der Erfinder hat erkannt, dass es vorteilhaft sein kann, wenn nicht die gesamte zur Verfügung stehende Kontaktfläche zwischen dem Außenumfang des Einfüllstutzens und der Innenwandung des Einfüllstutzenhalters durch schrumpfen miteinander verbunden wird, sondern geeignete Kontaktflächen zum Einschrumpfen ausgebildet werden. Hierzu kann es vorgesehen sein, dass der Einfüllstutzen an seinem Außenumfang wenigstens einen ringförmig umlaufenden Vorsprung bzw. eine Rippe aufweist, welcher in die Innenwand des Einfüllstutzenhalters eingeschrumpft werden kann bzw. eingeschrumpft ist. Ein ringförmig umlaufender Vorsprung bzw. eine ringförmig umlaufende Rippe lässt sich aufgrund der reduzierten Kontaktfläche besonders vorteilhaft in die Innenwand des Einfüllstutzenhalters einschrumpfen. Toleranzen oder anderweitige Abweichungen können somit kompensiert werden. Ein ringförmig umlaufender Vorsprung bietet sich auch deswegen an, da dadurch zuverlässig sichergestellt wird, dass der Außenumfang des Einfüllstutzens mit der Innenwandung des Einfüllstutzenhalters vollständig flüssigkeitsdicht verbunden bzw. abgedichtet ist. Dies ist insbesondere dann von Vorteil, wenn erfindungsgemäß vorgesehen ist, dass ein Deckel zum Verschließen der Einfüllöffnung auf den Einfüllstutzen aufgeschraubt wird, d. h. an diesen angepasst ist. Eine Verschraubung eines Deckels an dem Einfüllstutzenhalter ist demgegenüber von Nachteil, da der Einfüllstutzenhalter nicht so einfach in der Präzision hergestellt werden kann, wie dies beispielsweise durch Spritzgießen bei dem Einfüllstutzen möglich ist. Es ist daher zu bevorzugen, die Einfüllöffnung dadurch zu verschließen, dass der Verschlussdeckel auf den Einfüllstutzen angepasst ist.

Der Einfüllstutzen kann bei dessen Herstellung bereits mit einem Innen- oder einem Außengewinde versehen sein, auf welches der Verschlussdeckel aufschraubbar ist. Alternativ oder ergänzend dazu kann auch vorgesehen sein, dass der Einfüllstutzen bereits mit einer Dichtung versehen ist, vorzugsweise einem O-Ring oder dergleichen.

Von Vorteil ist es, wenn der Einfüllstutzen mehrere, vorzugsweise wenigstens drei ringförmige Vorsprünge (Rippen) aufweist, die vorzugsweise planparallel zueinander verlaufen und in die Innenwand des Einfüllstutzenhalters eingeschrumpft werden bzw. eingeschrumpft sind. Dadurch wird eine kippsichere und zuverlässige Verbindung zwischen dem Einfüllstutzen und dem Einfüllstutzenhalter erreicht. Zudem wird durch die Mehrzahl an ringförmigen Vorsprüngen auch eine besonders dichte Verbindung zwischen dem Einfüllstutzen und dem Einfüllstutzenhalter realisiert. Dies ist insbesondere dann bedeutsam, wenn der Verschlussdeckel dem Einfüllstutzen zugeordnet ist, da in diesem Fall vermieden werden muss, dass zwischen dem Einfüllstutzen und dem Einfüllstutzenhalter Flüssigkeit ausdringen kann.

Zwischen den ringförmigen Vorsprüngen können Verstärkungsstreben, die vorzugsweise axial zu dem Einfüllstutzen verlaufen, vorgesehen sein.

Erfindungsgemäß kann ferner vorgesehen sein, dass sich der Innendurchmesser des Einfüllstutzenhalters wenigstens in dem Bereich, in dem der Einfüllstutzen angeordnet ist, nach unten in Richtung auf den Innenraum des Behälters verjüngt. Auch dadurch lässt sich eine besonders gute Verbindung zwischen dem Einfüllstutzen und dem Einfüllstutzenhalter erreichen, insbesondere dann, wenn der Einfüllstutzen eine Form aufweist, die mit dem sich verjüngenden Innendurchmesser des Einfüllstutzenhalters wenigstens annähernd korrespondiert.

Von Vorteil ist es, wenn der Ringraum zur Aufnahme des Magneten nach unten in Richtung des Innenraums des Behälters offen ist.

Der Magnet kann derart positioniert werden, dass dieser eine Zapfpistole umschließt, wenn diese korrekt in den Einfüllstutzen eingeführt ist.

Eine verliersichere Anordnung des Magneten in dem Ringraum kann durch verschiedene Maßnahmen, beispielsweise durch ein Verclipsen, Verrasten, Verklemmen, Einpressen, Verschweißen oder Verkleben erfolgen. Besonders zu bevorzugen ist es, wenn wenigstens eine umlaufende Wandung des Ringraums wenigstens teilweise mit Vorsprüngen, Widerhaken, Rastelementen oder dergleichen versehen ist, welche den Magneten untergreifen, nachdem dieser von unten in den Ringraum eingeschoben wurde. Dabei kann vorgesehen sein, dass die mit den Widerhaken oder dergleichen versehene Wandung beim Einsetzen des Magneten radial nach außen ausweichen kann und sich nach dem Einsetzen des Magneten vorzugsweise elastisch wieder in die ursprüngliche Position zurückbewegt.

Möglich ist es auch, den Magneten durch ein zusätzliches Bauteil, beispielsweise einen Sprengring oder dergleichen, in dem Ringraum zu fixieren.

Von Vorteil ist es, wenn der Einfüllstutzenhalter wenigstens eine Verjüngungsstufe und/oder wenigstens einen Vorsprung aufweist, welcher derart ausgebildet ist, dass sich die Verjüngungsstufe und/oder der Vorsprung unterhalb des Ringraums befinden, wenn der Einfüllstutzen in den Einfüllstutzenhalter eingesetzt ist. Die Verjüngungsstufe und/oder der Vorsprung kann dabei den zur Verfügung stehenden freien Innendurchmesser des Einfüllstutzenhalters wenigstens in einem Teilbereich derart reduzieren, dass der Innendurchmesser des Einfüllstutzenhalters geringer ist als der Außendurchmesser des Magneten.

Die Erfinder haben erkannt, dass sich durch eine derartige Gestaltung in einfacher und kostengünstiger Weise vermeiden lässt, dass der Ringmagnet, sollte dieser den Ringraum ungewollt verlassen, in den Innenraum des Kunststoffbehälters fällt und dort gegebenenfalls Schäden verursacht.

Die Verjüngungsstufe bzw. der Vorsprung zur Reduzierung des Innendurchmessers des Einfüllstutzenhalters muss dabei nicht umlaufend ausgebildet sein, es kann bereits genügen, wenn der Einfüllstutzenhalter einen Vorsprung, eine Nase, einen Höcker oder dergleichen aufweist, der gewährleistet, dass der Magnet nicht in den Innenraum des Kunststoffbehälters fallen kann.

Von Vorteil kann es ferner sein, wenn der Einfüllstutzenhalter an seiner Innenwandung einen Endanschlag ausbildet, an welchem eine Anlagefläche des Einfüllstutzens anliegt, wenn der Einfüllstutzen in der vorgesehenen axialen Position innerhalb des Einfüllstutzenhalters positioniert ist. Der Endanschlag kann dabei beispielsweise als umlaufende Stufe ausgebildet sein. Des weiteren kann vorgesehen sein, dass die auf dem Endanschlag aufliegende Anlagefläche des Einfüllstutzen durch die Unterseite des untersten ringförmigen Vorsprungs bzw. die unterste ringförmige Rippe zur Verfügung gestellt wird. Der Endanschlag in Kombination mit der Anlagefläche des Einfüllstutzens gewährleistet, dass der Einfüllstutzen präzise an der gewünschten Position innerhalb des Einfüllstutzenhalters positioniert werden kann.

Von Vorteil ist es, wenn in den Wandungen des Ringraums, die den Magneten umgeben, Schlitze, Einschnitte, Kanäle oder Kerben eingebracht sind. Der Magnet kann somit von der in dem Behälter eingebrachten Flüssigkeit umspült werden. Diese Ausgestaltung eignet sich auch dazu, den Magneten besonders einfach in den Ringraum einzubringen, da die Schlitze, Einschnitte, Kanäle oder Kerben ein radiales bzw. elastisches Ausweichen der Wandung des Ringraums unterstützen. Ferner ist diese Ausgestaltung hilfreich, um mögliche Fertigungstoleranzen auszugleichen, welche gegebenenfalls dadurch verstärkt werden können, dass der erfindungsgemäße Behälter im späteren Betrieb unterschiedlichen Temperaturen ausgesetzt ist. Erfindungsgemäß kann dabei vorgesehen sein, dass die Schlitze, Einschnitte, Kanäle oder Kerben so angeordnet sind, dass der Ringmagnet an seiner Innenseite (Innenkreisfläche) und an seiner Außenseite (Außenkreisfläche) umspülbar ist.

Um zu vermeiden, dass der Magnet von der in dem Kunststoffbehälter aufgenommenen Flüssigkeit angegriffen wird, kann vorgesehen sein, dass der Magnet mit einer Epoxidharzschicht ummantelt ist. Alternativ kann auch eine andersweitige, insbesondere harnstoffresistente Ausbildung des Magneten gewählt werden. Der Magnet kann auch in ein Kunststoffteil eingesintert bzw. von einem Kunststoff umspritzt sein.

In einer Weiterbildung der Erfindung kann vorgesehen sein, dass der Magnet als Permanentmagnet oder als magnetisierbares Element oder als magnetisierter Kunststoff ausgebildet ist. Die Erfinder haben erkannt, dass auch ein magnetisiertes Element oder ein magnetisierbares Element anstelle des bislang üblichen Permanentmagneten eingesetzt werden kann.

Vorzugsweise handelt es sich bei dem Magneten um einen Ringmagneten.

Bei dem Ringmagneten kann es sich beispielsweise um ein Produkt handeln, dass unter dem Markennamen Elafix® vertrieben wird.

Der Einfüllstutzen kann ein- oder mehrteilig ausgebildet sein. Es bietet sich an, den Einfüllstutzen einteilig auszubilden. Es ist jedoch auch vorstellbar, den Einfüllstutzen wenigstens zweiteilig ausgebildet ist, beispielsweise um zu erreichen, dass der Teil des Einfüllstutzens, der den Magneten aufnimmt, nicht mit dem Teil des Einfüllstutzens verbunden ist, der den Verschlussdeckel aufnimmt bzw. dem Teil, der die abdichtende Verbindung zwischen der Innenwandung des Einfüllstutzenhalters und dem Außenumfang des Einfüllstutzens herstellt.

Alternativ oder ergänzend zu einer Ausgestaltung des Einfüllstutzens mit ringförmig und abdichtend umlaufenden Vorsprüngen bzw. Rippen kann auch vorgesehen sein, dass der Einfüllstutzen nur punktuell durch Rastnasen, Widerhaken oder dergleichen in den Einfüllstutzenhalter eingeschrumpft wird. In diesem Fall kann es notwendig sein, dass der Verschlussdeckel zum Verschließen der Einfüllöffnung auf dem Einfüllstutzenhalter beispielsweise durch Verschrauben aufgebracht wird.

Der Kunststoffbehälter kann beispielsweise durch Sintern, insbesondere Rotationssintern, aber auch durch eine Blastechnik hergestellt werden.

Bei dem Kunststoff, aus dem der Kunststoffbehälter hergestellt wird, kann es sich beispielsweise um Polyurethan, Polyamid, Polypropylen oder Polyethylen handeln. Als Kunststoff zur Herstellung des Einfüllstutzens kann ebenfalls vorzugsweise Polyamid, Polyurethan, Polyethylen oder Polypropylen verwendet werden.

Erfindungsgemäß kann vorgesehen sein, dass der Kunststoffbehälter Teil eines Nutzfahrzeugtanks ist. Dabei kann auch vorgesehen sein, dass der Kunststoffbehälter den Innenraum eines metallischen Nutzfahrzeugtanks bildet.

Der Kunststoffbehälter kann durch Sintern, vorzugsweise Rotationssintern, in einer metallischen Außenhaut eines Nutzfahrzeugtanks hergestellt werden. Dies eignet sich insbesondere auch deshalb, da beispielsweise ein Harnstoff die metallische Außenhaut angreifen würde. Dadurch, dass der Kunststoffbehälter durch einen Rotationssinterprozess in der metallischen Außenhaut hergestellt ist, wird eine besonders kostengünstige Maßnahme gewählt, da die metallische Außenhaut des Nutzfahrzeugtanks das Werkzeug bildet.

Erfindungsgemäß kann ferner vorgesehen sein, dass der Kunststoffbehälter als Kunststoffbeschichtung bzw. als Kunststoffinnenbeschichtung eines Nutzfahrzeugtanks ausgebildet ist - vorzugsweise hergestellt durch ein Rotationssinterverfahren. Dadurch wird vermieden, dass die metallische Außenhaut durch den möglicherweise aggressiven Betriebsstoff angegriffen wird. Gleichzeitig wird der zur Verfügung stehende Platz innerhalb der metallischen Außenhaut optimal genutzt. Die den Kunststoffbehälter bildende Kunststoff-Sinterschicht kann vorzugsweise dünn auf die Innenwand der metallischen Außenhaut aufgebracht sein. Die Kunststoff-Sinterschicht kann vorzugsweise dadurch hergestellt werden, dass die Außenhaut nach deren Ausformung insgesamt erhitzt und nachfolgend ein Kunststoffpulver in deren Innenraum eingebracht wird. Das Kunststoffpulver schmilzt dabei an der heißen Innenwand auf und bildet dadurch die Kunststoff-Sinterschicht.

Durch die metallische Außenhaut wird eine hohe Steifigkeit erreicht, ohne dass große Wandstärken notwendig sind.

Zur Ausbildung der Kunststoff-Sinterschicht eignet sich besonders die bereits aufgezählten Kunststoffe Polyurethan, Polyamid, Polypropylen oder Polyethylen. Durch diese Kunststoffe lassen sich dünne Wandstärken realisieren, die dennoch die gewünschten Anforderungen, nämlich insbesondere die erforderliche chemische Inertheit gegenüber den mitzuführenden Betriebsstoffen aufweisen.

Vorteilhaft kann es sein, wenn der Kunststoff an der Innenseite der metallischen Außenhaut anhaftet. Der Kunststoff kann mit einer Eigenschaft ausgebildet werden, durch die ein Anhaften erreicht wird. Gegebenenfalls kann vorgesehen sein, dass der Kunststoff durch Kohlefasern oder dergleichen verstärkt ist. Alternativ können auch andere Versteifungseinlagen vorgesehen sein.

Durch eine geeignete Gestaltung der Einlassöffnung in der metallischen Außenhaut kann - gegebenenfalls durch Zuhilfenahme eines zusätzlichen Werkzeugs - erreicht werden, dass die Kunststoff-Sinterschicht den einstückig mit dem Kunststoffbehälter ausgebildeten Einfüllstützenhalter ausbildet, in welchem dann vor dessen Abkühlung der Einfüllstutzen eingesetzt wird.

Der Einfüllstutzen kann in den Rotationskörper bzw. den Einfüllstutzenhalter eingepresst werden und zieht sich dann durch den Schrumpfprozess des Rotationskörpers bzw. des Einfüllstutzenhalters auf diesen auf. Gegebenenfalls können dabei auch noch Dichtringe und dergleichen mit eingelegt und durch das Schrumpfen so zwischen dem Einfüllstutzen und dem Einfüllstutzenhalter positioniert werden, dass eine flüssigkeitsdichte Verbindung zwischen den Bauteilen entsteht.

Die metallische Außenhaut kann beispielsweise aus Aluminium oder einer Aluminiumlegierung hergestellt sein. In Frage kommt selbstverständlich auch ein anderes Metall, beispielsweise Stahl, Edelstahl oder eine entsprechenden Legierung.

Die erfindungsgemäße Lösung ermöglicht es auch, integrierte Mehrfachbehälter, insbesondere Doppelbehälter innerhalb einer Tragstruktur bzw. einer gemeinsamen metallischen Außenhaut, zu realisieren. Die Integration der Behälter innerhalb einer gemeinsamen Tragstruktur kann den Vorteil haben, dass nicht jeder Teilbehälter für sich mittels zweier oder mehrerer Konsolen am Fahrzeugrahmen befestigt werden muss, sondern dass der integrierte Behälter in einer Einheit mit weiteren Behältern mit lediglich zwei Konsolen an einem Fahrzeugrahmen angebracht werden kann.

Erfindungsgemäß kann ein Kraftstofftank für Nutzfahrzeuge vorgesehen sein, welcher wenigstens einen ersten Aufnahmeraum für einen Kraftstoff und einen zweiten Aufnahmeraum für einen zweiten Kraftstoff oder einem Betriebsstoff oder eine Betriebsstoffkomponente aufweist. Hierbei kann vorgesehen sein, dass der zweite Aufnahmebehälter durch einen Kunststoffbehälter realisiert ist, so wie dieser vorstehend beschrieben wurde. Dabei kann der den zweiten Aufnahmeraum bildende Behälter mit dem ersten Aufnahmeraum zu einer Einheit verbunden sein.

Der erste Aufnahmeraum, welcher zur Aufnahme eines herkömmlichen Kraftstoffs vorgesehen sein kann, benötigt keine Kunststoff-Sinterschicht an seiner Innenseite und kann daher in bekannter Art und Weise kostengünstig hergestellt werden. Die Verbindung mit dem Behälter, welcher den zweiten Aufnahmeraum ausbildet, kann vorzugsweise dadurch erfolgen, dass stirnseitige Enden der Umfangswandungen, welche den ersten bzw. den zweiten Aufnahmeraum ausbilden, miteinander verschweißt oder auf andere Art und Weise miteinander verbunden werden. Hierzu sind aus dem Stand der Technik Lösungen bereits bekannt.

Bei dem Verfahren zur Herstellung eines Behälters für Betriebsstoffe und/oder Kraftstoffe von Nutzfahrzeugen ist zunächst vorgesehen, dass eine metallische Außenhaut, die einen im Wesentlichen geschlossenen Innenraum ausbildet, erhitzt wird. In den Innenraum wird, vorzugsweise durch die Einlassöffnung für die später in den Innenraum einzubringende Flüssigkeit, ein Kunststoff, vorzugsweise ein Kunststoffpulver, eingefüllt. Der Kunststoff bildet dabei an der Innenseite der metallischen Außenhaut eine Kunststoff-Sinterschicht aus. Die Kunststoff-Sinterschicht durchdringt dabei erfindungsgemäß die Einlassöffnung in der metallischen Außenhaut, um dort einen Einfüllstutzenhalter auszubilden. Hierzu können geeignete zusätzliche Werkzeuge an die Einlassöffnung in der metallischen Außenhaut angesetzt werden, die gewährleisten, dass der Einfüllstutzenhalter die gewünschte Form erhält. Vor dem Abkühlen der Kunststoff-Sinterschicht wird in den Einfüllstutzenhalter ein Einfüllstutzen eingesetzt, welcher durch das Abkühlen des Einfüllstutzenhalters in diesen eingeschrumpft wird. Der Einfüllstutzen ist dabei derart ausgebildet, dass dieser einen Ringraum ausbildet, in welchem ein Ringmagnet verliersicher aufgenommen ist.

Bei einem alternativer vorgesehenen Verfahren zur Herstellung eines Behälters für Betriebsstoffe und/oder Kraftstoffe von Nutzfahrzeugen ist zunächst vorgesehen, dass eine metallische Außenhaut, die einen im Wesentlichen geschlossenen Innenraum ausbildet, erhitzt wird. In den Innenraum wird ein Kunststoff eingebracht, um eine Kunststoff-Sinterschicht an der Innenseite der metallischen Außenhaut auszubilden. Bei dem Kunststoff handelt es sich vorzugsweise um ein Kunststoffpulver. In die Einlassöffnung in der metallischen Außenhaut wird, vorzugsweise vor dem Einbringen des Kunststoffpulvers, ein Einfüllstutzenhalter eingesetzt. Erfindungsgemäß ist dabei vorgesehen, dass die auszubildende Kunststoff-Sinterschicht den in die Einlassöffnung der metallischen Außenhaut eingesetzten Einfüllstutzenhalter verliersicher anbindet bzw. mit ansintert. Vor dem Abkühlen der Kunststoff-Sinterschicht wird in den Einfüllstutzenhalter ein Einfüllstutzen eingesetzt, welcher durch das Abkühlen des Einfüllstutzenhalters in diesen eingeschrumpft wird. Der Einfüllstutzen ist dabei derart ausgebildet, dass dieser einen Ringraum ausbildet, in welchem ein Ringmagnet verliersicher aufgenommen ist.

Vorzugsweise wird der Einfüllstutzen in den Einfüllstutzenhalter erst dann eingesetzt, wenn sich dieser bereits wieder abkühlt. Es kann jedoch auch vorgesehen sein, dass der Einfüllstutzen bereits in den Einfüllstutzenhalter eingesetzt ist, bevor die metallische Außenhaut erhitzt wird bzw. während des Sinterprozesses.

Bei allen Ausführungsformen und Varianten der Erfindung kann es von Vorteil sein, wenn die in der metallischen Außenhaut vorgesehene Einlassöffnung zur Aufnahme eines Einfüllstutzenhalters einen nach innen oder außen geprägten Rand bzw. einen nach innen oder außen hochgezogenen Rand aufweisen. Der Vorteil dieser Ausgestaltung besteht darin, dass das Werkzeug zur Durchführung des Rotationssinterverfahrens definiert angesetzt werden kann. Allgemein ist es von Vorteil, wenn die Einlassöffnung in der metallischen Außenhaut bzw. deren Rand so gestaltet bzw. geformt ist, dass das Rotationssinterwerkzeug hieran definiert angesetzt werden kann.

In allen Ausführungsformen und Varianten ist es von Vorteil, wenn die Kunststoffsinterschicht bzw. der Einfüllstutzenhalter bzw. der Einfüllstutzen aus Polyethylen, vorzugsweise mit einem Copolymer, insbesondere mit anhaftenden Eigenschaften besteht.

In allen Ausführungsformen und Varianten kann es von Vorteil sein, wenn der Einfüllstutzenhalter lediglich einen Vorsprung bzw. eine Verjüngungsstufe bzw. einen Höcker aufweist, welcher derart ausgebildet ist, dass, wenn der Einfüllstutzen in den Einfüllstutzenhalter eingesetzt ist, sich der Vorsprung bzw. die Verjüngungsstufe bzw. der Höcker unterhalb des Ringraums des Ringmagnets befindet, wobei der Vorsprung bzw. die Verjüngungsstufe bzw. der Höcker den zur Verfügung stehenden freien Innendurchmesser des Einfüllstutzenhalters wenigstens in einem Teilbereich derart reduziert, dass der Innendurchmesser des Einfüllstutzenhalters geringer ist als der Außendurchmesser des Ringmagnets.

Von Vorteil ist es, der Einfüllstutzen wenigstens einen Entlüftungskanal aufweist, dessen auf den Innenraum des Behälters ausgerichtetes Ende wenigstens teilweise von der Verjüngungsstufe des Einfüllstutzenhalters verdeckt ist, wobei die Verjüngungsstufe mit einem axialen Abstand unterhalb des Endes des Entlüftungskanals angeordnet ist.

Von Vorteil ist es, wenn der Einfüllstutzen zwei oder mehrere Entlüftungskanäle aufweist und der Einfüllstutzenhalter mit einer Verjüngungsstufe versehen ist, welche den Entlüftungskanal, der von einem im Innenraum des Behälters ansteigenden Flüssigkeitspegel zuletzt verschlossen bzw. erreicht wird, wenigstens teilweise verdeckt.

Von Vorteil ist es, wenn die Entlüftungskanäle im Wesentlichen in Axialrichtung des Einfüllstutzen verlaufen.

Die Entlüftungsöffnungen können im Querschnitt betrachtet vorzugsweise eine Kreisbogenform aufweisen.

Es hat sich als besonders geeignet herausgestellt, wenn die Vorsprünge bzw. die Verjüngungsstufen bzw. die Höcker des Einfüllstutzenhalters in Axialrichtung unterhalb der Entlüftungskanäle angeordnet sind, so dass die Entlüftungskanäle in Richtung auf den Tank wenigstens teilweise von dem jeweils zugeordneten Vorsprung bzw. der Verjüngungsstufe bzw. dem Höcker verdeckt werden. Dadurch wird die Gefahr reduziert, dass Harnstoff aus dem Tank herausspritzt. Die Verjüngungsstufe bildet einen in Axialrichtung versetzt unterhalb des Entlüftungskanals angeordneten Boden aus.

Von Vorteil ist es, wenn die Verjüngungsstufe eine auf das Ende des Entlüftungskanals ausgerichtete Fläche aufweist, wobei die Fläche mit einem axialen Abstand unterhalb des Entlüftungskanals angeordnet ist und wobei die Fläche wenigstens annähernd an die Querschnittsfläche des zugewandten Endes des Entlüftungskanals angepasst ist und den Entlüftungskanal axial in Richtung auf den Innenraum wenigstens annähernd vollständig verdeckt.

In einer zu bevorzugenden Ausgestaltung, bei der der Einfüllstutzenhalter lediglich einen Vorsprung bzw. eine Verjüngungsstufe bzw. einen Höcker aufweist, kann vorgesehen sein, dass dieser mit einem Entlüftungskanal in dem Einfüllstutzen so fluchtet, dass der Entlüftungskanal in Richtung auf den Tankinnenraum im Wesentlichen von dem Vorsprung bzw. der Verjüngungsstufe bzw. dem Höcker verdeckt wird. Hierbei weist die Verjüngungsstufe jedoch einen axialen Abstand zu dem Ende des Entlüftungskanals auf. Von Vorteil ist es dabei, wenn der Einfüllstutzenhalter und der Einfüllstutzen in der Einlassöffnung in der metallischen Außenwand so positioniert sind, dass der sich in der obersten Position befindliche Entlüftungskanal des Einfüllstutzen von der Verjüngungsstufe bzw. dem Vorsprung bzw. dem Höcker verdeckt ist. Es hat sich herausgestellt, dass die Gefahr, dass Harnstoff aus einem Entlüftungskanal herausspritzt, bei dem Entlüftungskanal am größten ist, dessen dem Tankinneren zugewandtes Ende zuletzt von dem steigenden Flüssigkeitspegel im Tank erreicht wird. Es ist daher von Vorteil, wenn dieser Entlüftungskanal nicht geradlinig durchgängig ist, sondern von dem Vorsprung bzw. der Verjüngungsstufe bzw. dem Höcker so abgedeckt wird, dass der Harnstoff nicht geradlinig herausspritzen kann.

Von Vorteil ist es, wenn die Verjüngungsstufe mit einer Entlüftungsbohrung versehen ist, welche eine Verbindung zwischen dem Entlüftungskanal und einem Luftraum herstellt, welcher sich oberhalb des innenraumseitigen Endes des Einfüllstutzenhalters befindet.

Die Entlüftungsbohrung stellt eine Verbindung zwischen dem Entlüftungskanal und einem Luftraum her, der sich bildet, wenn der Flüssigkeitspegel im Harnstoffbehälter die dem Tankinneren zugewandte Öffnung des Einfüllstutzenhalters vollständig verschlossen hat.

Vorteilhafte Weiterbildungen der Erfindung ergeben sich aus den abhängigen Ansprüchen. Nachfolgend ist anhand der Zeichnung ein Ausführungsbeispiel der Erfindung prinzipmäßig dargestellt.

Es zeigt:
- Fig. 1: Eine perspektivische Draufsicht auf einen in einer Einlassöffnung einer metallischen Außenhaut ausgebildeten Einfüllstutzenhalter;
- Fig. 2: einen Einfüllstutzenhalter gemäß Fig. 1 in einer perspektivischen Darstellung von unten;
- Fig. 3: eine Seitenansicht eines Einfüllstutzens;
- Fig. 4: eine perspektivische Darstellung auf den in Fig. 3 dargestellten Einfüllstutzen von oben;
- Fig. 5: eine perspektivische Darstellung auf den in Fig. 3 dargestellten Einfüllstutzen von unten;
- Fig. 6: eine Darstellung des in Fig. 3 dargestellten Einfüllstutzens in einem Längsschnitt;
- Fig. 7: eine perspektivische Darstellung des in Fig. 3 dargestellten Einfüllstutzen in einem weiteren Längsschnitt;
- Fig. 8: einen Längsschnitt durch einen Einfüllstutzenhalter, in den ein Einfüllstutzen eingesetzt ist, in einer perspektivischen Darstellung;
- Fig. 9: einen Längsschnitt durch einen Einfüllstutzenhalter, in den ein Einfüllstutzen eingesetzt ist;
- Fig. 10: eine perspektivische Darstellung eines Längsschnitts eines Einfüllstutzens in einer zu den Figuren 3 bis 9 alternativen Ausführungsform;
- Fig. 11: eine prinzipmäßige Darstellung eines Kraftstofftanks mit einem ersten Aufnahmeraum zur Aufnahme eines Kraftstoffs und einem zweiten Aufnahmeraum für einen zweiten Kraftstoff, einen Betriebstoff oder eine Betriebstoffkomponente, welcher mit einer Kunststoff-Sinterbeschichtung versehen ist und dessen Einlassöffnung mit dem erfindungsgemäßen Einfüllstutzenhalter versehen ist, in den ein Einfüllstutzen eingeschrumpft ist;
- Fig. 12: einen Längsschnitt durch einen einstückig mit dem Kunststoffbehälter 1 ausgebildeten Einfüllstutzenhalter in einer alternativen Ausführungsform mit einem Innengewinde;
- Fig. 13: einen Längsschnitt durch einen unabhängig von dem Kunststoffbehälter ausgebildeten Einfüllstutzenhalter;
- Fig. 14: eine Draufsicht auf einen in einer Einlassöffnung einer metallischen Außenhaut ausgebildeten Einfüllstutzhalter;
- Fig. 15: eine Darstellung gemäß Fig. 14, wobei in den Einfüllstutzenhalter ein Einfüllstutzen eingeschrumpft ist;
- Fig. 16: eine perspektivische Darstellung gemäß Fig. 15, wobei der Einfüllstutzen in einem Längsschnitt dargestellt ist;
- Fig. 17: eine perspektivische Darstellung eines Längsschnittes des Einfüllstutzenhalters gemäß Fig. 14;
- Fig. 18: eine perspektivische Darstellung eines Längsschnittes des Einfüllstutzenhalters und des Einfüllstutzens gemäß Fig. 15;
- Fig. 19: eine Draufsicht von oben auf den Einfüllstutzen, wobei zur besseren Erkennbarkeit der Entlüftungskanäle die Verschlussglieder für einen Deckel nicht dargestellt sind;
- Fig. 20: eine leicht perspektivische Ansicht von unten auf den in Fig. 19 dargestellten Einfüllstutzen; und
- Fig. 21: eine Prinzipdarstellung eines Kunststoffbehälters mit einer Entlüftungsbohrung in dem Einfüllstutzenhalter.

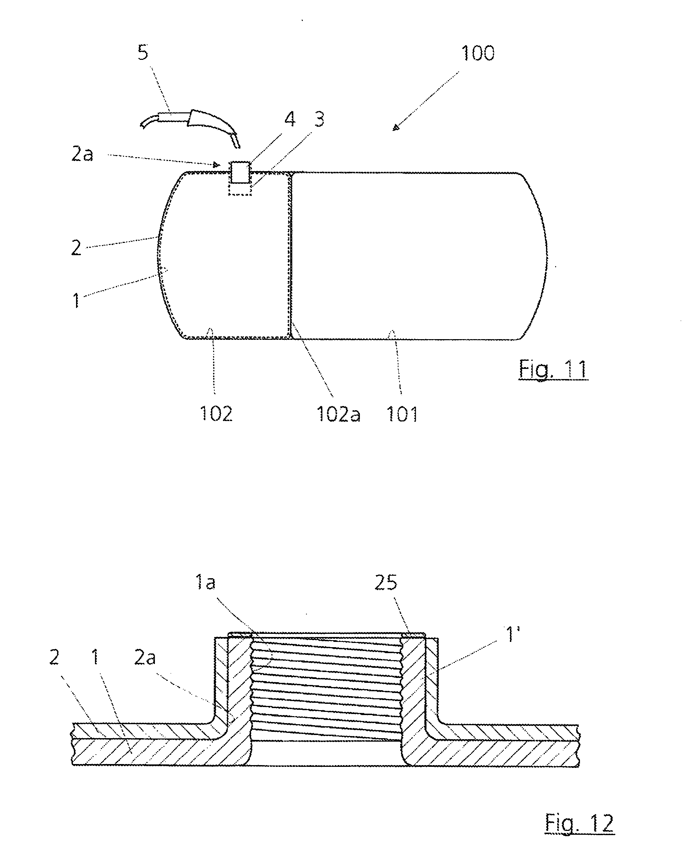

Der erfindungsgemäße Kunststoffbehälter 1 ist im Ausführungsbeispiel als Kunststoffbeschichtung bzw. Kunststoffinnenbeschichtung einer metallischen Außenhaut 2 eines Nutzfahrzeugtanks ausgebildet. Hierauf ist die Erfindung selbstverständlich jedoch nicht beschränkt, der erfindungsgemäße Kunststoffbehälter 1 kann auch ohne metallische Außenhaut hergestellt sein. Des Weiteren ist im Ausführungsbeispiel gemäß Fig. 11 vorgesehen, dass der erfindungsgemäße Kunststoffbehälter 1 einen zweiten Aufnahmeraum eines Kraftstofftanks bereitstellt. Auch hierauf ist die erfindungsgemäße Lösung jedoch nicht beschränkt. Der erfindungsgemäße Kunststoffbehälter kann auch als Einzelbehälter realisiert werden, der gegebenenfalls mit einer metallischen Außenhaut versehen ist.

Die nachfolgend dargestellten Ausführungsformen bzw. die einzelnen erfindungsgemäßen Merkmale gelten für alle denkbaren Kunststoffbehälter, unabhängig von deren konkreten Herstellung und auch unabhängig davon, ob der Kunststoffbehälter eine metallische Außenhaut aufweist oder ob der Kunststoffbehälter als Einzeltank oder als Teilbehälter eines größeren, mehrere Teilbehälter aufweisenden Kraftstofftanks realisiert ist.

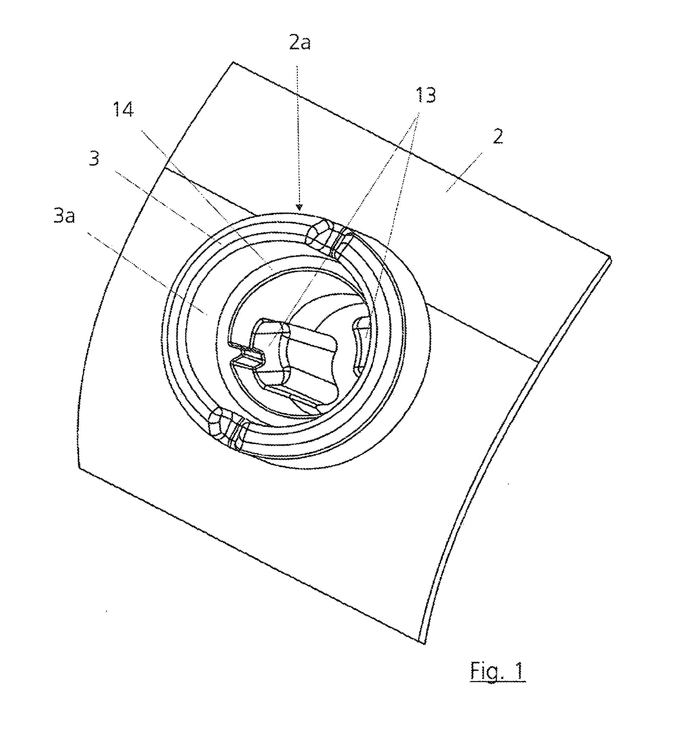

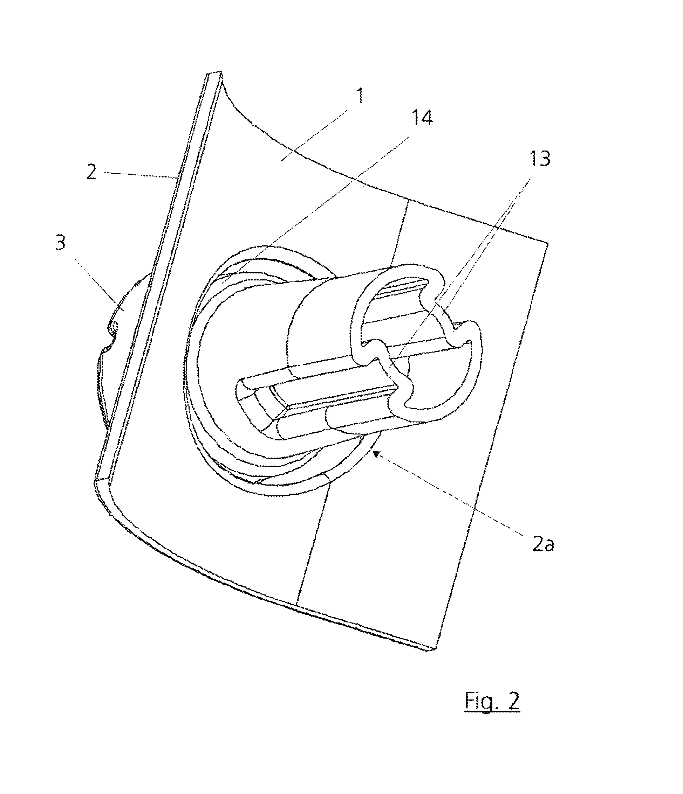

Die Figuren 1, 2, 8 und 9 zeigen einen Ausschnitt eines Kunststoffbehälters 1 zur Aufnahme eines Betriebesstoffes, im Ausführungsbeispiel eines Harnstoffes bzw. eines AdBlues für ein Nutzfahrzeug. Der Kunststoffbehälter 1 ist dabei als Kunststoffinnenbeschichtung einer metallischen Außenhaut 2 eines Nutzfahrzeugtanks ausgebildet. Die Herstellung der Kunststoffinnenbeschichtung an der Innenseite der metallischen Außenhaut 2 kann durch beliebige Verfahren erfolgen, im Ausführungsbeispiel ist die Kunststoffinnenbeschichtung durch ein Rotationssinterverfahren hergestellt.

Im Ausführungsbeispiel wird die Kunststoffinnenbeschichtung nachfolgend als Kunststoffbehälter 1 bezeichnet.

Wie aus den Figuren 1, 2, 8 und 9 ersichtlich ist, weist der Kunststoffbehälter 1 einen einstückig mit diesem ausgebildeten Einfüllstutzenhalter 3 auf. Der Einfüllstutzenhalter 3 erstreckt sich dabei durch eine Einlassöffnung 2a in der metallischen Außenhaut 2.

Die metallische Außenhaut 2, welche den Kunststoffbehälter 1 umgibt, ist im Ausführungsbeispiel aus Aluminium oder einer Aluminiumlegierung hergestellt.

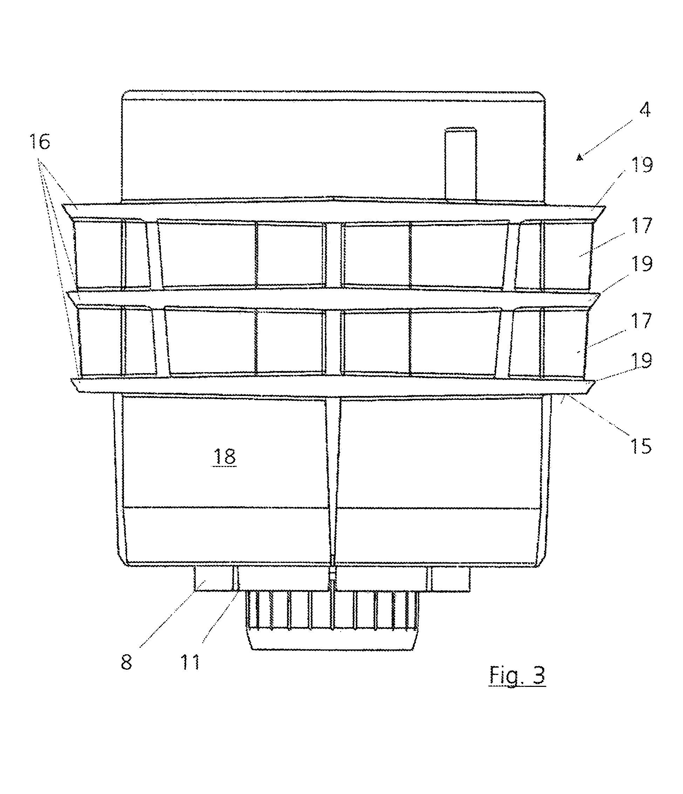

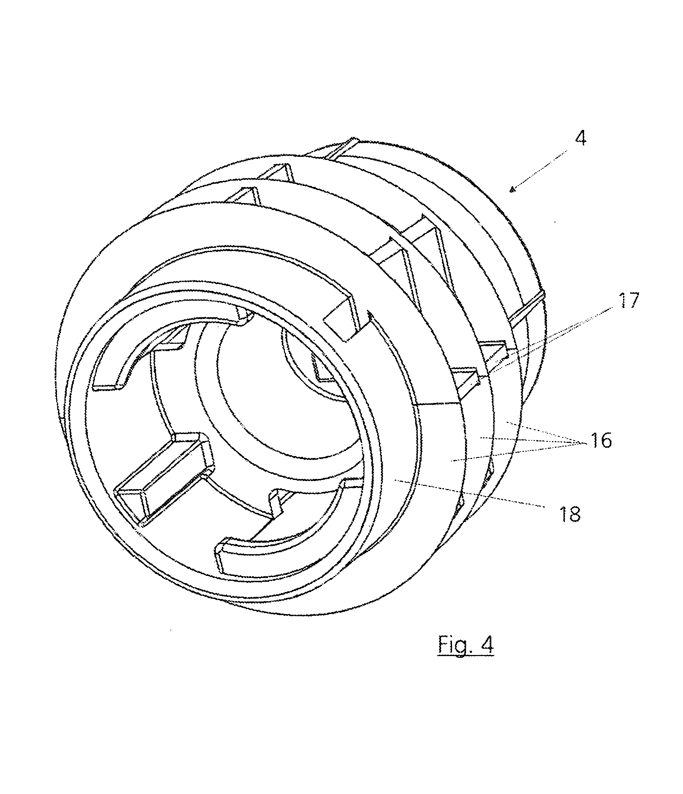

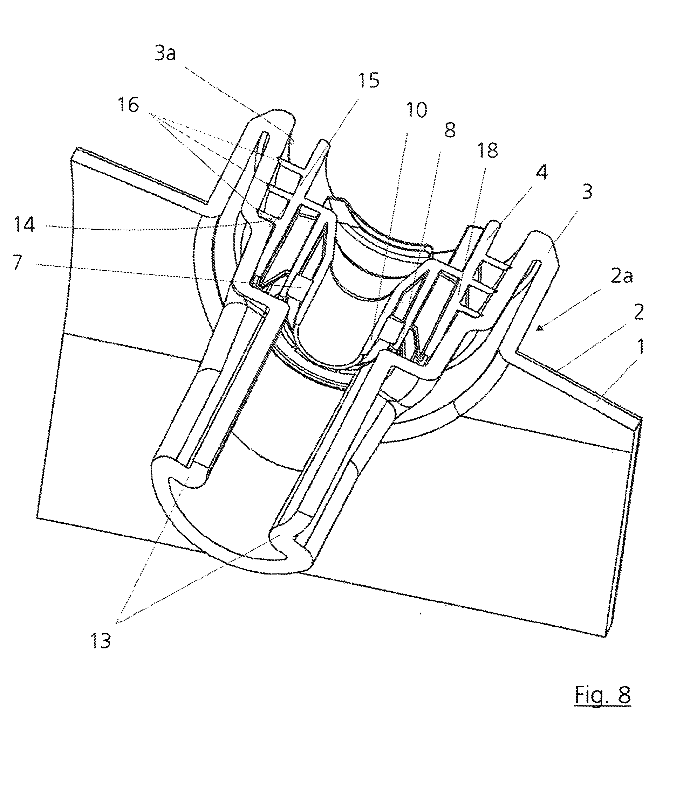

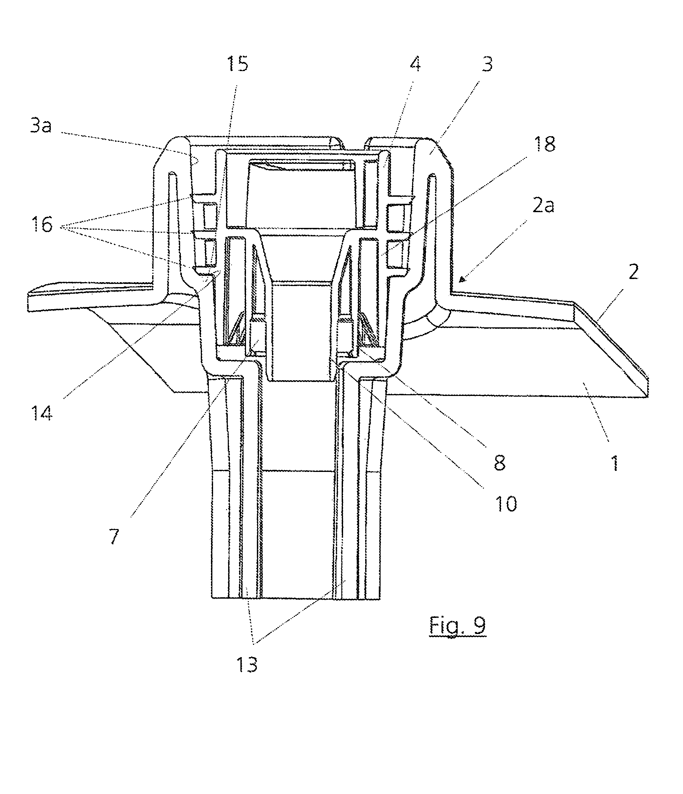

Wie in den Figuren 8 und 9 erkennbar ist, ist in den Einfüllstutzenhalter 3 ein in den Figuren 3 bis 7 näher dargestellter Einfüllstutzen 4 eingeschrumpft. Der Einfüllstutzen 4 ist in dem Einfüllstutzenhalter 3 lediglich durch einschrumpfen ohne zusätzliche Maßnahmen, d. h. ohne zusätzliche Verbindungstechniken oder Verbindungsglieder gehalten. Der Einfüllstutzen 4 dient zur Aufnahme einer Zapfpistole 5, welche in Fig. 11 prinzipmäßig angedeutet ist. Der Innendurchmesser des Einfüllstutzen 4 ist im Ausführungsbeispiel an den üblichen Außendurchmesser einer Zapfpistole 5 für Harnstoff angepasst.

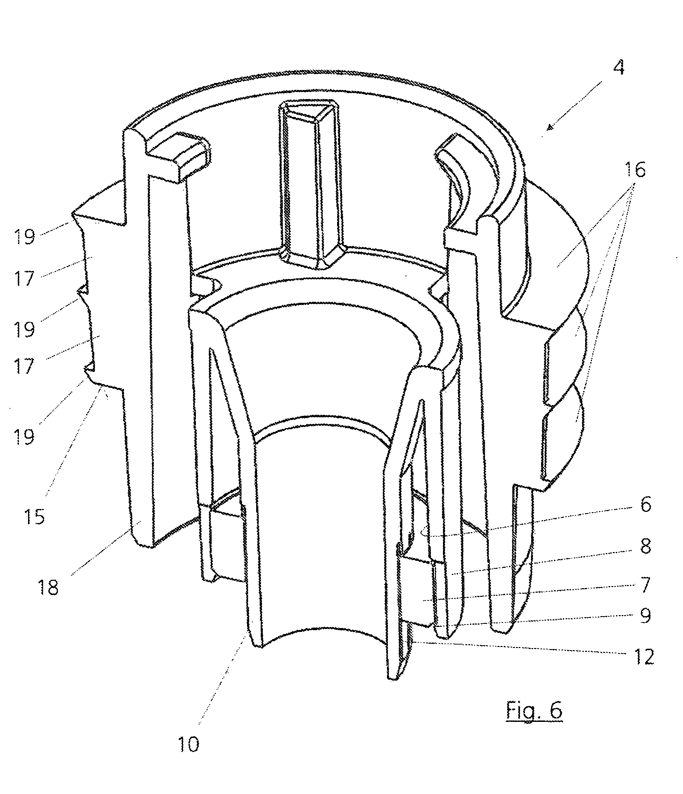

Der Einfüllstutzen 4 weist, wie insbesondere aus den Figuren 6 bis 9 ersichtlich ist, einen Ringraum 6 bzw. einen Aufnahmeraum zur Aufnahme eines Magneten 7 auf. Der Magnet 7 dient zur Vermeidung einer Fehlbetankung und ist so positioniert, dass dieser die Zapfpistole 5 umschließt, wenn diese in üblicher Weise in den Einfüllstutzen 4 eingeführt ist. Der Magnet 7 wirkt dabei derart auf die Zapfpistole 5 ein, dass deren Schließmechanismus geöffnet wird, so dass ein Befüllen des Kunststoffbehälters 1 möglich ist. Der Magnet 7 ist im Ausführungsbeispiel als Ringmagnet ausgebildet. Der Ringmagnet 7 ist im Ausführungsbeispiel von einer Epoxidharzschicht ummantelt, so dass dieser harnstoffresistent ist.

Die Schrumpfverbindung zwischen dem Einfüllstutzen 4 und dem Einfüllstutzenhalter 3 ist im Ausführungsbeispiel dadurch realisiert, dass der Einfüllstutzen 4 in den Einfüllstutzenhalter 3 eingesetzt ist bzw. wird, bevor der Einfüllstutzenhalter 3 nach dessen Formgebungsprozess abgekühlt ist. Der Einfüllstutzen 4 wird somit in den Einfüllstutzenhalter 3 eingesetzt, wenn dieser noch heiß ist.

Im Ausführungsbeispiel kann zusätzlich vorgesehen sein, dass der Einfüllstutzen 4 in einem gekühlten Zustand in den Einfüllstutzenhalter 3 eingesetzt ist bzw. wird.

Im Ausführungsbeispiel ist vorgesehen, dass der Einfüllstutzen 4 aus Kunststoff ausgebildet ist. Ferner ist im Ausführungsbeispiel vorgesehen, dass der Einfüllstutzen 4 als Spritzgussteil hergestellt ist.

Der Ringmagnet 7 ist im Ausführungsbeispiel als Permanentmagnet ausgebildet.

Im Ausführungsbeispiel ist vorgesehen, dass der Ringraum 6 nach unten in Richtung des Innenraums des Behälters 1 offen ist.

Die Fixierung des Ringmagneten 7 in dem Ringraum 6 erfolgt im Ausführungsbeispiel dadurch, dass eine äußere Wandung 8 des Ringraums 6 an deren Unterseite umlaufend mit einem Vorsprung 9 versehen ist, welcher in den Ringraum 6 hineinragt bzw. dann, wenn der Ringmagnet 7 in den Ringraum 6 eingeführt ist, unterhalb des Ringmagneten 7 angeordnet ist. Der umlaufende widerhakenartige Vorsprung 9 reduziert dabei den Abstand zu einer inneren Wandung 10 des Ringraums 6 derart, dass der Abstand geringer ist als die Stärke des Ringmagneten 7.

Der Ringraum 6 und der Ringmagnet 7 sind im Ausführungsbeispiel derart aneinander angepasst, dass der Ringmagnet 7 zwischen der äußeren Wandung 8 und der inneren Wandung 10 eingeklemmt ist.

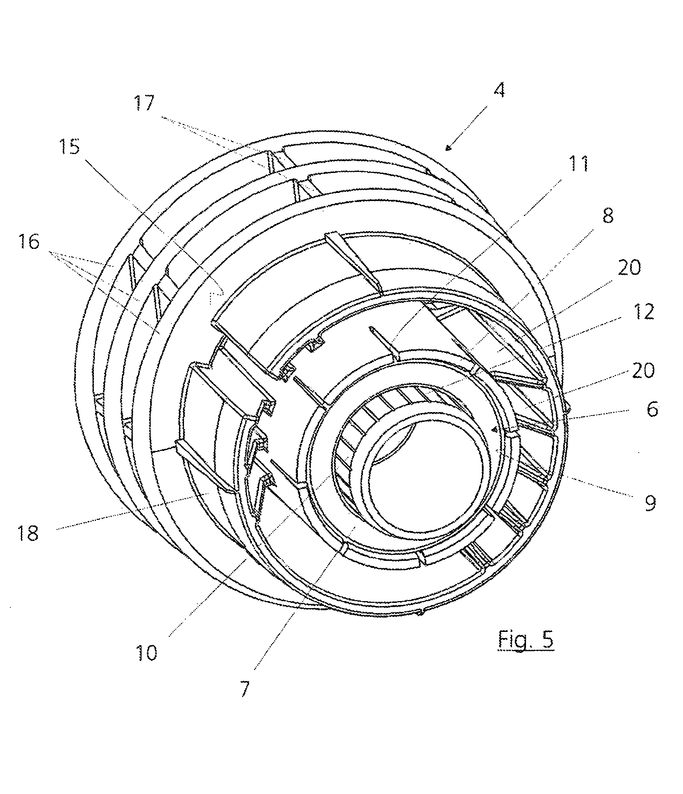

Insbesondere aus Fig. 5 ist ersichtlich, dass die äußere Wandung 8 des Ringraums 6 im Ausführungsbeispiel Schlitze 11 aufweist, die es ermöglichen, dass der Ringmagnet 7 in dem Ringraum 6 mit einer gewissen Vorspannung gehalten werden kann. Die Schlitze 11 ermöglichen es dabei auch, dass Toleranzen, beispielsweise bedingt durch Fertigungsabweichungen bzw. Temperaturschwankungen beim späteren Einsatz des Kunststoffbehälters 1 ausgeglichen werden können. Ferner ermöglichen es die Schlitze 11, dass der Ringmagnet 7 von der in dem Kraftstoffbehälter eingebrachten Flüssigkeit umspült werden kann.

Wie sich aus den Figuren 5, 6 und 7 ergibt, weist auch die innere Wandung 10 des Ringraums 6 analog Schlitze 12 auf, die demselben Zweck dienen. Der Ringmagnet 7 wird somit von beiden Seiten, d. h. an seiner Innenseite (Innenkreisfläche) und an seiner Außenseite (Außenkreisfläche) umspült. Ferner können beide Wandungen 8, 10 beim Einsetzen des Ringmagneten 7 leicht radial ausweichen und später wieder mit einer entsprechenden Vorspannung (elastisch) zurückschnappen, so dass der Ringmagnet 7 in der gewünschten Position positioniert ist.

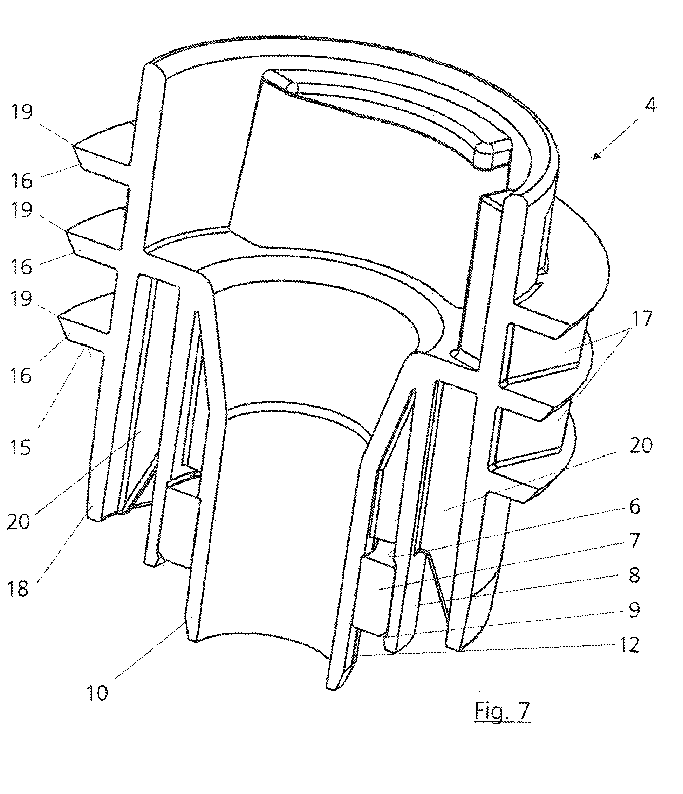

Wie sich insbesondere aus den Figuren 6 und 7 ergibt, weist der Ringraum 6 eine im Verhältnis zum Ringmagnet 7 relativ große axiale Ausdehnung auf, insbesondere weist auch die äußere Wandung 8 eine im Vergleich zu dem Ringmagnet 7 relativ große axiale Länge auf, wodurch erreicht wird, dass die Wandung 8 an einem Bereich mit dem Einfüllstutzen 4 verbunden ist, welcher relativ weit von dem offenen unteren Ende des Ringraums 6 beabstandet ist. Ein radiales Ausweichen der äußeren Wandung 8, um den Ringmagneten 7 aufzunehmen, wird somit unterstützt.

Die innere Wandung 10 stellt einen Innendurchmesser bzw. einen Innenbereich zur Aufnahme der Zapfpistole 5 zur Verfügung und sorgt zum Einen dafür, dass die Zapfpistole 5 geführt wird und zum Anderen dafür, dass keine Zapfpistolen eingeführt werden können, die einen definierten Durchmesser überschreiten.

Wie in den Figuren 1, 2, 8 und 9 erkennbar, weist der Einfüllstutzenhalter 3 zwei Vorsprünge 13 bzw. Verjüngungsstufen bzw. Höcker auf, welche derart ausgebildet sind, dass, wenn der Einfüllstutzen 4 in den Einfüllstutzenhalter 3 eingesetzt ist, sich die beiden Vorsprünge 13 unterhalb des Ringraums 6 befinden, wobei die beiden Vorsprünge 13 den zur Verfügung stehenden freien Innendurchmesser des Einfüllstutzenhalters 3 wenigstens in einem Teilbereich derart reduzieren, dass der Innendurchmesser des Einfüllstutzenhalters 3 geringer ist als der Außendurchmesser des Ringmagneten 7.

Im Ausführungsbeispiel ist vorgesehen, dass die Vorsprünge 13 einander gegenüberliegend ausgebildet sind und in etwa einen Winkelbereich von 30 bis 90° einnehmen. Diese Form kann auch dazu dienen, die Stabilität des Einfüllstutzenhalters 3 zu erhöhen.

Wie sich ferner aus den Figuren ergibt, weist der Einfüllstutzenhalter 3 an seiner Innenwandung einen Endanschlag 14 auf. Der Endanschlag 14 begrenzt die Möglichkeit, den Einfüllstutzen 4 einzuführen bzw. definiert die Einschubtiefe des Einfüllstutzens 4 in den Einfüllstutzenhalter 3. Wie sich insbesondere aus den Figuren 8 und 9 ergibt, liegt der Einfüllstutzen 4 mit einer Anlagefläche 15 auf dem Endanschlag 14 auf, wenn der Einfüllstutzen 4 in der vorgesehenen Position innerhalb des Einfüllstutzenhalters 3 positioniert ist.

Der Endanschlag 14 ist im Ausführungsbeispiel als umlaufende Stufe ausgebildet.

Der Einfüllstutzen 4 weist an seinem Außenumfang 18 drei ringförmig umlaufende Rippen 16 bzw. Vorsprünge auf, deren radial außenliegenden Enden in die Innenwand des Einfüllstutzenhalters 3 eingeschrumpft sind. Die Rippen 16 verlaufen dabei planparallel zueinander. Die Rippen 16 sind in einem regelmäßigen Abstand zueinander angeordnet. Zwischen den Rippen 16 sind zueinander gleichmäßig beabstandet Verstrebungen 17 angeordnet. Die Verstrebungen 17 erstrecken sich im Wesentlichen in axialer Richtungen.

Die Unterseite der untersten ringförmig umlaufenden Rippe 16 bildet die Anlagefläche 15 zur Anlage an dem Endanschlag 14 des Einfüllstutzenhalters 3.

Wie sich insbesondere aus den Figuren 3, 6, 7, 8 und 9 ergibt, weisen die Rippen 16 radial umlaufend an ihren äußeren Enden, d. h. an den Enden, die in die Innenwand 3a des Einfüllstutzenhalters 3 eingeschrumpft werden, Rastnasen 19 zum Verankern des Einfüllstutzen 4 in dem Einfüllstutzenhalter 3 auf. Die Rastnasen 19 verlaufen dabei im Längsschnitt betrachtet keilförmig zu. Die Rastnasen 19 müssen nicht zwangsläufig ringförmig umlaufend ausgebildet sein, sondern können auch nur jeweils in Teilbereichen angeordnet sein.

Im Ausführungsbeispiel ist vorgesehen, dass sich der Innendurchmesser des Einfüllstutzenhalters 3 wenigstens in dem Bereich, in dem der Einfüllstutzen 4 angeordnet ist, nach unten in Richtung auf den Innenraum des Behälters 1 verjüngt.

Im Ausführungsbeispiel ist ferner vorgesehen, dass ein nicht näher dargestellter Verschlussdeckel zum Verschließen des Kunststoffbehälters 1 mit dem Einfüllstutzen 4 verschraubbar oder anderweitig dort festlegbar ist. Der Einfüllstutzen 4 kann hierzu geeignete Verschlussmittel, beispielsweise ein Gewinde, aufweisen.

Ferner sind im Ausführungsbeispiel in nicht näher dargestellter Weise zwischen dem Außenumfang 18 bzw. der Außenwand des Einfüllstutzen 4 und der äußeren Wandung 8 des Ringraums 6 Entlüftungsbohrungen vorgesehen.

Zwischen dem Außenumfang 18 bzw. der Außenwand des Einfüllstutzen 4 und der äußeren Wandung 8 des Ringraums 6 können Versteifungswände 20 angeordnet sein, die im Wesentlichen in axialer Richtung verlaufen und unter anderem die Entlüftungsbohrungen ausbilden bzw. definieren. Die Versteifungswände 20 erhöhen die Stabilität des Einfüllstutzen 4.

Fig. 11 zeigt einen Kraftstofftank 100 mit einem ersten Aufnahmeraum 101 für einen Kraftstoff und einem zweiten Aufnahmeraum 102 für einen zweiten Kraftstoff, einen Betriebsstoff oder eine Betriebsstoffkomponente, im Ausführungsbeispiel einem Harnstoff bzw. einem AdBlue. Der zweite Aufnahmeraum 102 ist dabei in der Art ausgebildet, wie dies im Ausführungsbeispiel gemäß den Figuren 1 bis 9 beschrieben wurde. Der zweite Aufnahmeraum 102 weist somit eine metallische Außenhaut 2 mit einer Kunststoffinnenbeschichtung 1, vorzugsweise hergestellt durch Rotationssintern, auf. Die Kunststoffinnenbeschichtung stellt dabei den Kunststoffbehälter 1 dar. In der Einlassöffnung 2a ist der erfindungsgemäß einstückig mit dem Kunststoffbehälter 1 ausgebildete Einfüllstutzenhalter 3 ausgebildet, in den ein Einfüllstutzen 4 eingeschrumpft ist.

Der zweite Aufnahmeraum 102 ist mit dem ersten Aufnahmeraum 101 zu einer Einheit verbunden, beispielsweise verschweißt, so dass ein gemeinsamer Kraftstofftank 100 für ein Nutzfahrzeug entsteht. Dies kann dadurch erfolgen, dass der zweite Aufnahmeraum 102 zunächst als separater Behälter hergestellt wird. Die Verbindung mit dem ersten Aufnahmeraum 101 kann beispielsweise dadurch erfolgen, dass eine offene Stirnseite der Umfangswandung des ersten Aufnahmeraums 101 mit einer Stirnwand 102a des zweiten Aufnahmeraums 102 verschweißt wird. Alternativ dazu kann auch vorgesehen sein, dass beide Stirnseiten der Umfangswandung des ersten Aufnahmeraums 101 durch eigene Stirnwände verschlossen sind. Die beiden Aufnahmeräume 101 und 102 sind somit als getrennte Behälter ausgebildet und können in bekannter Weise miteinander verschweißt werden.

Ferner ist es möglich, dass die in Fig. 11 mit dem Bezugszeichen 102a bezeichnete Stirnwand des Aufnahmeraums 102 als Trennwand ausgebildet ist, welche die beiden Aufnahmeräume 101, 102 voneinander trennt. Die Trennwand kann dabei aus Metall, aber auch aus einem Kunststoff, beispielsweise hergestellt durch ein Rotationssinterverfahren, gebildet sein.

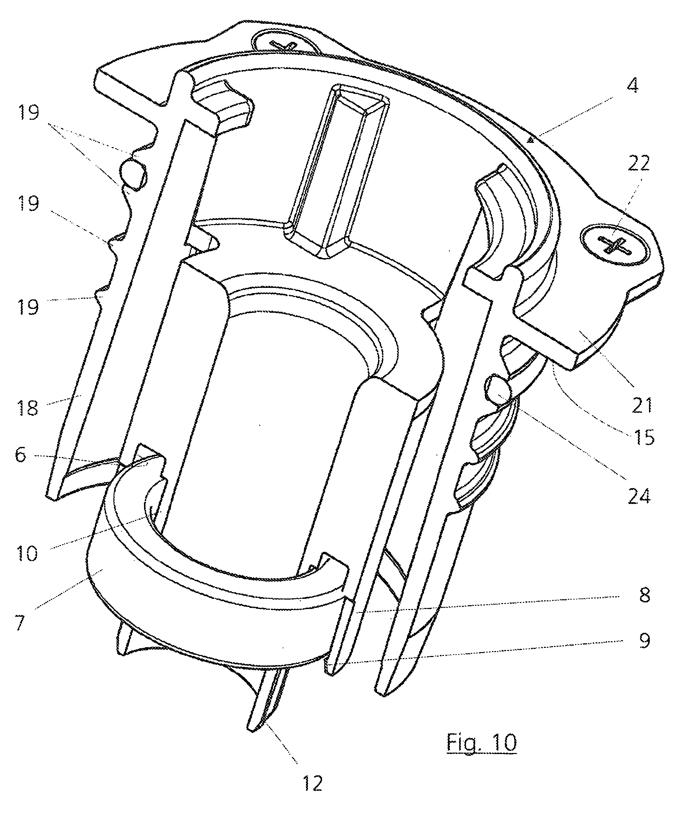

Fig. 10 zeigt eine zu den Figuren 3 bis 9 alternative Ausgestaltung des Einfüllstutzens 4. Grundsätzlich können alle Merkmale, Varianten und Details, die bereits zu dem Einfüllstutzen 4 in der Version gemäß den Figuren 3 bis 9 genannt wurden, auch bei dem Einfüllstutzenhalter 4 gemäß Fig. 10 realisiert werden, insofern dies nicht durch die nachfolgenden Abwandlungen ausgeschlossen ist. Der Einfüllstutzenhalter 4 gemäß Fig. 10 unterscheidet sich von dem Einfüllstutzenhalter gemäß den Figuren 3 bis 9 dadurch, dass anstelle von Rippen 16 lediglich Rastnasen 19 an der Außenwand 18 des Einfüllstutzenhalters 4 ausgebildet sind. Die Erfinder haben erkannt, dass sich die Herstellungskosten reduzieren lassen, wenn anstelle von Rippen 16 (mit Rastnasen 19) lediglich Rastnasen 19 ausgebildet werden. Ferner hat sich herausgestellt, dass die Rastnasen 19 ausreichend sind, um ein Einschrumpfen des Einfüllstutzens 4 in den Einfüllstutzenhalter 3 zu ermöglichen.

Des weiteren unterscheidet sich der in Fig. 10 dargestellte Einfüllstutzen 4 dadurch, dass am Außenumfang 18 eine (oder gegebenenfalls mehrere) Dichtung 24 angeordnet ist, so dass die Dichtung 24 zwischen der Außenwand 18 des Einfüllstutzens 4 und einer Innenwand 3a des Einfüllstutzenhalters 3 abdichtet. Hierzu ist in der in Fig. 10 dargestellten Ausführungsform vorgesehen, dass die Dichtung 24 (radial) über die Rastnasen 19 übersteht. Ferner kann vorgesehen sein, dass die Dichtung 24 zwischen zwei Rastnasen 19 eingesetzt und dadurch gehalten ist. Die Dichtung 24 kann vorzugsweise als Dichtring ausgebildet sein.

Der in Fig. 10 dargestellte Einfüllstutzen 4 weist an seinem oberen Ende eine flanschartige Erweiterung 21 auf, die sich im Wesentlichen in radialer Richtung erstreckt. Die flanschartige Erweiterung 21 ermöglicht es dabei, dass der Einfüllstutzen durch eine Verschraubung, beispielsweise über Schrauben 22, befestigt werden kann. Vorzugsweise sind vier Schrauben 22 vorgesehen. Die Befestigung erfolgt vorzugsweise am Einfüllstutzenhalter 3, der hierzu eine nicht näher dargestellte Gegenfläche aufweisen kann. Durch die Verschraubung kann die ohnehin bereits vorhandene Schrumpfverbindung zwischen dem Einfüllstutzen 4 und dem Einfüllstutzenhalter 3 unterstützt werden. Drehmomente lassen sich durch die Verschraubung, vorzugsweise durch die Schrauben 22, besonders gut aufnehmen. Die Unterseite des Flansches 21 kann vorzugsweise als Anlagefläche 15 dienen, um in Verbindung mit einem Endanschlag 14 des Einfüllstutzenhalters 3 eine definierte Positionierung des Einfüllstutzens 4 zu erreichen. Dabei liegt die Unterseite des Flansches 21, d. h. die Anlagefläche 15, vorzugsweise auf der Oberseite des Einfüllstutzenhalters 3 auf, vorzugsweise an einer Gegenfläche, die auch zur Verschraubung dient. In diesem Fall stellt dann die Oberseite bzw. die Gegenfläche des Einfüllstutzenhalters 3 den Endanschlag 14 dar (nicht näher dargestellt).

Die in Fig. 10 dargestellten Merkmale können auch einzeln oder in beliebigen Kombinationen mit der Ausführungsform des Einfüllstutzens 4 gemäß den Figuren 3 und 9 kombiniert werden.

Fig. 12 zeigt zwei alternative Ausgestaltungen. Gemäß der ersten Ausgestaltung ist vorgesehen, dass der Einfüllstutzenhalter 3 einstückig mit dem Kunststoffbehälter 1 bzw. der Kunststoff-Sinterschicht 1 ausgebildet ist. Dies kann vorzugsweise dadurch erfolgen, dass ein Werkzeug, das zum Rotationssintern eingesetzt wird, eine geeignete Form aufweist, so dass der Kunststoff, welcher an der Innenseite der metallischen Außenhaut 2 die Kunststoff-Sinterschicht 1 ausbildet, gleichzeitig auch den Einfüllstutzenhalter 3 ausbildet. Ergänzend oder alternativ kann dabei auch vorgesehen sein, dass der Rand der Einlassöffnung 2a nach außen gebogen ist (siehe Fig. 12), so dass an der Innenseite des hochgebogenen Rands eine Kunststoff-Sinterschicht 1' ausgebildet wird, welche gemäß der ersten Ausgestaltung den Einfüllstutzenhalter 3 bildet. Das Werkzeug, welches zum Rotationssintern eingesetzt wird, kann einen Abschnitt aufweisen, der so gestaltet ist, dass der Einfüllstutzenhalter 3 an seiner Innenwandung 3a mit einem Innengewinde versehen wird. Durch den Einfüllstutzenhalter 3 gemäß Fig. 12 lässt sich der Einfüllstutzen 4 durch eine Verschraubung mit diesem verbinden. Hierzu kann der Einfüllstutzen 4 an seinem Außenumfang 18 ein entsprechendes Außengewinde aufweisen. Eine derartige Verbindung kann alternativ oder ergänzend zu einem Einschrumpfen eingesetzt werden. Dies kann beispielsweise auch dadurch erreicht werden, dass sich das Innengewinde des Einfüllstutzenhalters 3 nur über einen Teil der Höhe des Einfüllstutzenhalters 3 erstreckt.

Ergänzend oder alternativ dazu kann auch vorgesehen sein, dass der Einfüllstutzen 4 eine flanschartige Erweiterung 21 aufweist, so wie dies in Fig. 10 dargestellt ist, um durch eine entsprechende Verschraubung 22 mit dem Einfüllstutzenhalter 3 gemäß Fig. 12 verschraubt zu werden.

Im Ausführungsbeispiel nach Fig. 12 weist der Einfüllstutzenhalter 3 an seiner Oberseite eine Dichtung 25 auf. Die Dichtung 25 kann dabei zwischen dem Einfüllstutzenhalter 3 und dem Einfüllstutzen abdichten.

Bei der zweiten alternativen Ausgestaltung gemäß Fig. 12 kann vorgesehen sein, dass es sich bei dem einstückig mit der Kunststoff-Sinterschicht 1 ausgebildeten hülsenförmigen Abschnitt 1' nicht um den Einfüllstutzenhalter 3 handelt, sondern lediglich um eine Erweiterung der Einlassöffnung. In diesem Fall wird ein Einfüllstutzenhalter 3 separat ausgebildet und durch Verschraubung mit dem hülsenförmigen Teilstück 1' der Kunststoff-Sinterschicht 1 durch Verschraubung verbunden. In den eingeschraubten Einfüllstutzenhalter 3 kann anschließend durch ein Einschrumpfen eine Verbindung mit einem Einfüllstutzen 4, erfolgen.

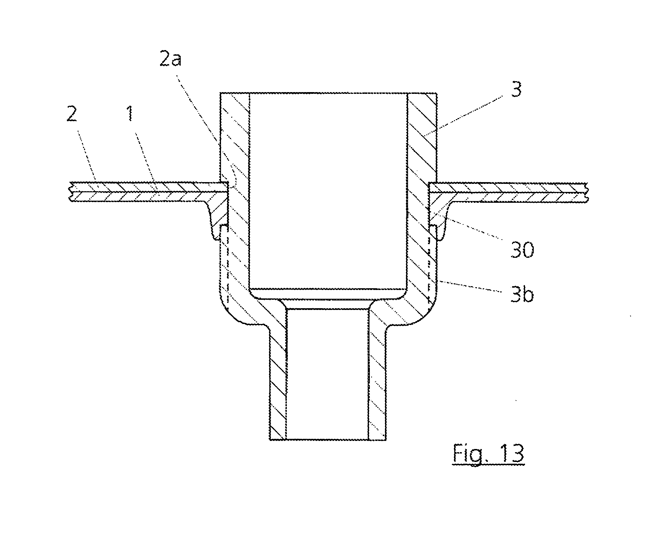

Fig. 13 zeigt eine alternative Ausgestaltung des Einfüllstutzen-halters 3, die nicht unter den wortlant der Ansprüche fällt. Dabei ist vorgesehen, dass der Einfüllstutzenhalter 3 unabhängig von dem Kunststoffbehälter 1 bzw. der Kunststoff-Sinterschicht 1 als separates Bauteil ausgebildet ist. Der Einfüllstutzenhalter 3 wird dabei in eine Einlassöffnung 2a einer metallischen Außenhaut 2 eingesetzt. Dies erfolgt vorzugsweise derart, dass der Einfüllstutzenhalter 3 nach außen und nach innen über die Einlassöffnung 2a übersteht. Nach dem Einsetzen des Einfüllstutzenhalters 3 in die Einlassöffnung 2a wird ein Kunststoff in den Innenraum der metallischen Außenhaut 2 eingebracht, damit dieser dort eine Kunststoff-Sinterschicht 1 an der Innenseite der metallischen Außenhaut 2 ausbildet. Dadurch verbindet sich die Kunststoff-Sinterschicht 1 ebenfalls mit dem Einfüllstutzenhalter 3, so dass dieser verliersicher angeordnet ist. Der Einfüllstutzenhalter wird durch den Rotationssinterprozess fixiert.

Durch den Sinterprozess wird vorzugsweise auch der Einfüllstutzenhalter, der vorzugsweise ebenfalls aus Kunststoff gebildet ist, so erwärmt, dass dessen Kunststoff vorzugsweise leicht aufschmilzt, wodurch sich eine gute Verbindung mit der Kunststoff-Sinterschicht ergibt.

Zur Verbesserung der Anbindung des Einfüllstutzenhalters 3 kann vorgesehen sein, dass dieser einen Einschnitt bzw. eine Nut 30 oder einen Rücksprung aufweist, so dass die Kunststoff-Sinterschicht 1 eine formschlüssige Verbindung herstellen kann.

Eine mögliche Ausgestaltung eines Rücksprungs ist in Fig. 13 strichliniert dargestellt. Von Vorteil ist es, wenn der Einfüllstutzenhalter 3 von außen auf die metallische Außenhaut 2 aufgesetzt werden kann bzw. ein Anschlag ausgebildet ist, so dass sich eine definierte Anlage ergibt.

Die Außenwandung 3b des Einfüllstutzenhalters 3 kann, insbesondere in dem Bereich, in dem diese innerhalb der Außenhaut 2 angeordnet ist, eine beliebige geeignete Form, z. B. Rillen, eine Riffelung oder dergleichen aufweisen, so dass eine gute Anbindung bzw. Verbindung mit der Kunststoff-Sinterschicht 1 möglich ist.

Ein Vorteil der Ausgestaltung des Einfüllstutzenhalters 3 gemäß Fig. 13 besteht darin, dass der Einfüllstutzenhalter 3 durch die separate Ausgestaltung eine geeignet große Wandstärke erhalten kann, während die Kunststoff-Sinterschicht 1 eine möglichst geringe Wandstärke aufweist. Die Wandstärke des Einfüllstutzenhalters 3 kann beispielsweise 4 bis 10 mm, vorzugsweise 6 mm, betragen, während die Wandstärke der Kunststoff-Sinterschicht 1 vorzugsweise 0,5 bis 3 mm, besonders bevorzugt 0,5 bis 1 mm aufweist.

Der in Fig. 13 dargestellte Einfüllstutzenhalter 3 eignet sich zur Verbindung bzw. Befestigung aller vorstehend beschriebenen Einfüllstutzen 4.

In einer für alle Ausführungsvarianten vorteilhaften Ausgestaltung kann vorgesehen sein, dass ein Rand 200 der Einlassöffnung 2a verprägt ist (nach außen oder nach innen), so dass eine Fixierhilfe für ein Rotationssinterwerkzeug geschaffen wird.

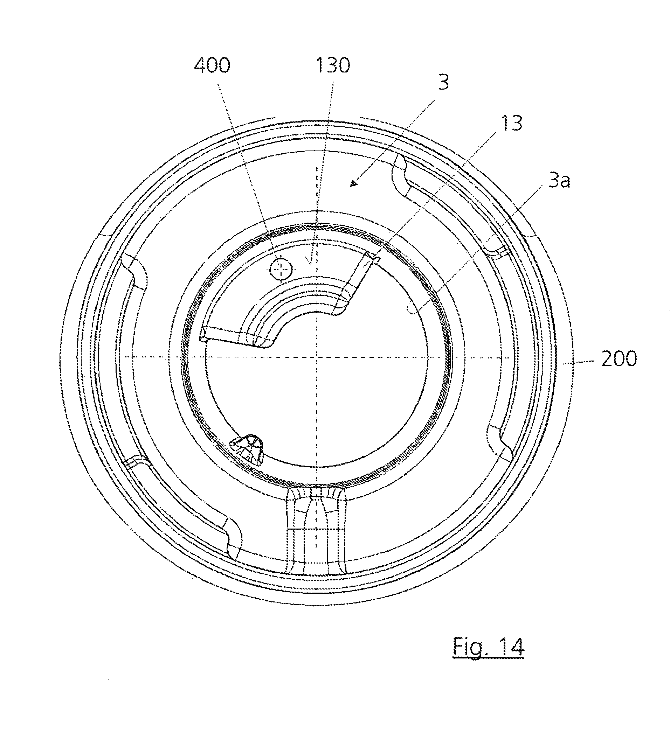

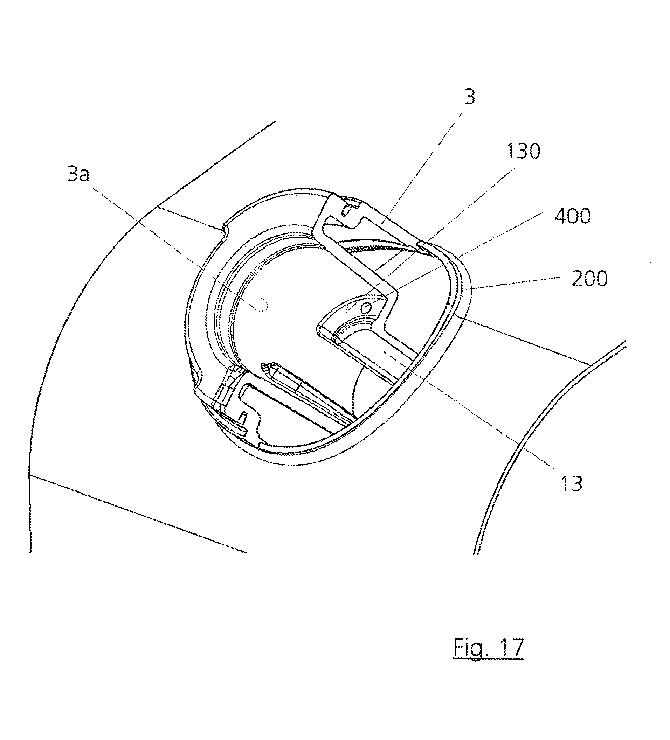

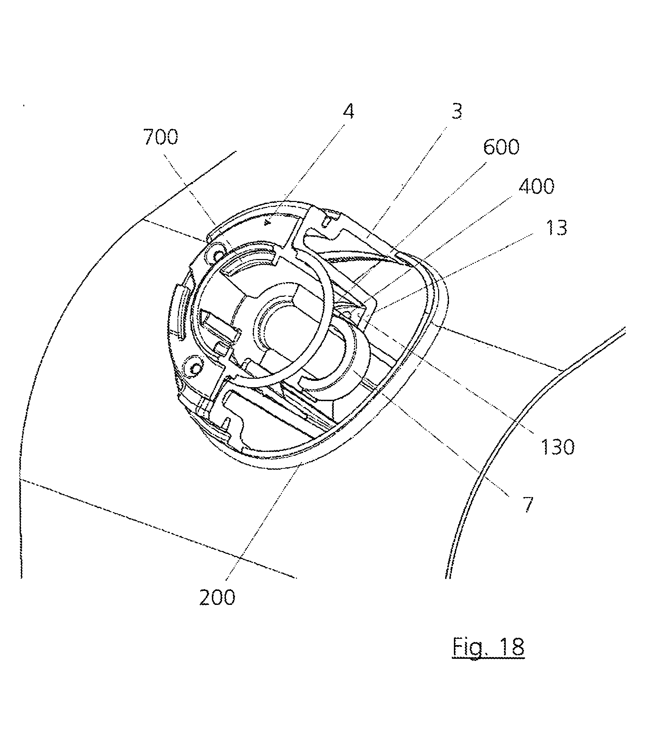

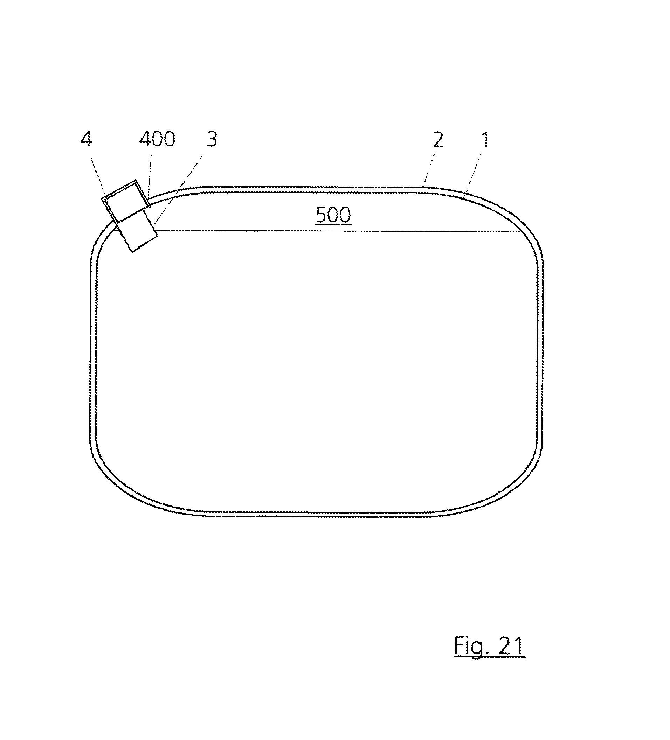

Nachfolgend werden anhand der Figuren 14 bis 21 im Wesentlichen die von den Figuren 1 bis 13 abweichenden Merkmale näher beschrieben.

Fig. 14 zeigt eine Ausgestaltung des Einfüllstutzenhalters 3 mit nur einer Verjüngungsstufe bzw. einem Vorsprung 13 bzw. einem Höcker. Zur Vereinfachung wird nachfolgend lediglich Bezug auf einen Vorsprung 13 genommen. Die Offenbarung soll jedoch gleichermaßen für eine Verjüngungsstufe bzw. für eine Verjüngung oder einen Höcker geltend.

Der Vorsprung 13 ist derart ausgebildet, dass, wenn der Einfüllstutzen 4 in den Einfüllstutzenhalter 3 eingesetzt ist, sich der Vorsprung 13 unterhalb des Ringraums 6 befindet, wobei der Vorsprung 13 den zur Verfügung stehenden freien Durchmesser des Einfüllstutzenhalters 3 wenigstens in einem Teilbereich derart reduziert, dass der Innendurchmesser des Einfüllstutzenhalters 3 geringer ist als der Außendurchmesser des Ringmagneten 7.

Der Vorsprung 13 weist eine Fläche 130 auf, die in einer Draufsicht betrachtet im Wesentlichen eine Kreisbogenform aufweist.

In den in Fig. 14 dargestellten Einfüllstutzenhalter 3 wird in der bereits beschriebenen Art und Weise ein Einfüllstutzen 4 eingeschrumpft. Der Einfüllstutzen 4 kann dabei eine Gestaltung aufweisen, wie diese bereits bezüglich der Ausführungsformen nach den Figuren 1 bis 13 beschrieben wurde.

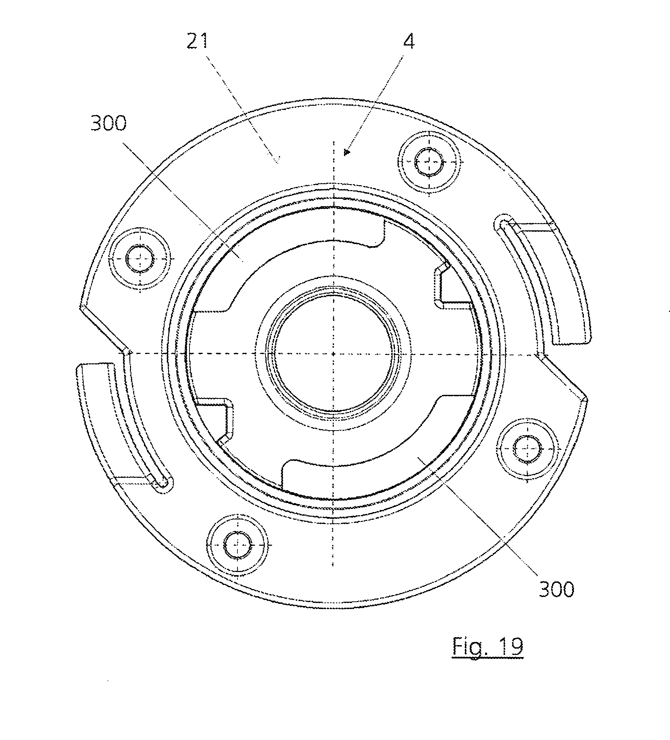

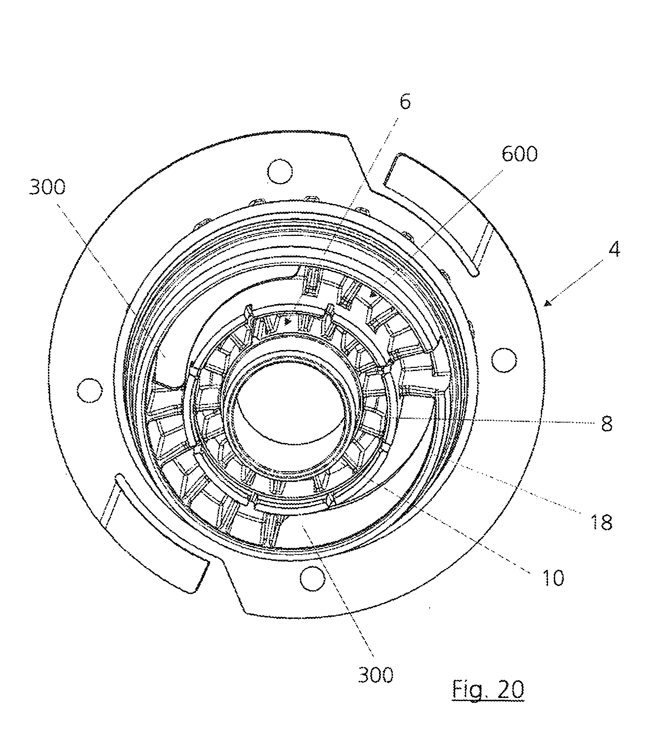

Eine Draufsicht auf eine mögliche Ausgestaltung des Einfüllstutzens 4 ist in Fig. 19 und eine Unteransicht in Fig. 20 dargestellt. Der in den Figuren 19 und 20 dargestellte Einfüllstutzen 4 weist zwei Entlüftungskanäle 300 auf, deren auf den Innenraum des Behälters 1 ausgerichtete Enden wenigstens teilweise von einer oder gegebenenfalls mehrerer Vorsprünge des Einfüllstutzenhalters 3 verdeckt sein können. In der in den Figuren 14 bis 21 dargestellten Ausführungsform ist vorgesehen, dass nur einer der beiden Entlüftungskanäle 300 von dem Vorsprung 13 bzw. dessen Fläche 130 verdeckt wird. Der Entlüftungskanal 300, der sich im Wesentlichen in Axialrichtung erstreckt, mündet somit nicht geradlinig bzw. axial in den Innenraum des Behälters. Zwischen dem dem Innenraum des Behälters zugewandten Ende des Entlüftungskanals 300 und der Fläche 130 des Vorsprungs 13 ist ein axialer Abstand vorgesehen, so dass Luft aus dem Innenraum unter Umgehung des Vorsprungs 13 in den Entlüftungskanal 300 strömen kann.

Das Austreten von Flüssigkeit wird jedoch deutlich erschwert, da keine geradlinige Verbindung zwischen dem Innenraum des Behälters und dem Entlüftungskanal 300 vorhanden ist.

Selbstverständlich können auch mehrere Vorsprünge 13 vorgesehen sein, die gegebenenfalls mehrere Entlüftungskanäle 300 verschließen.

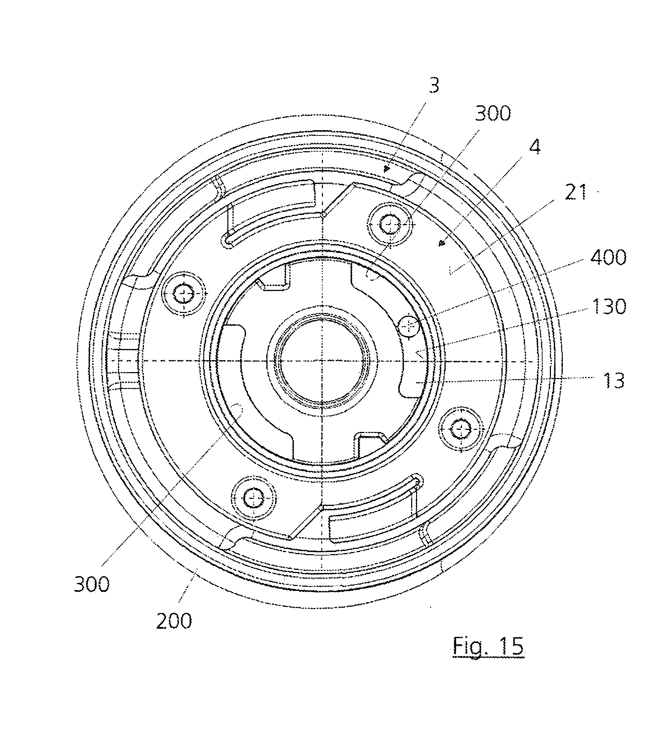

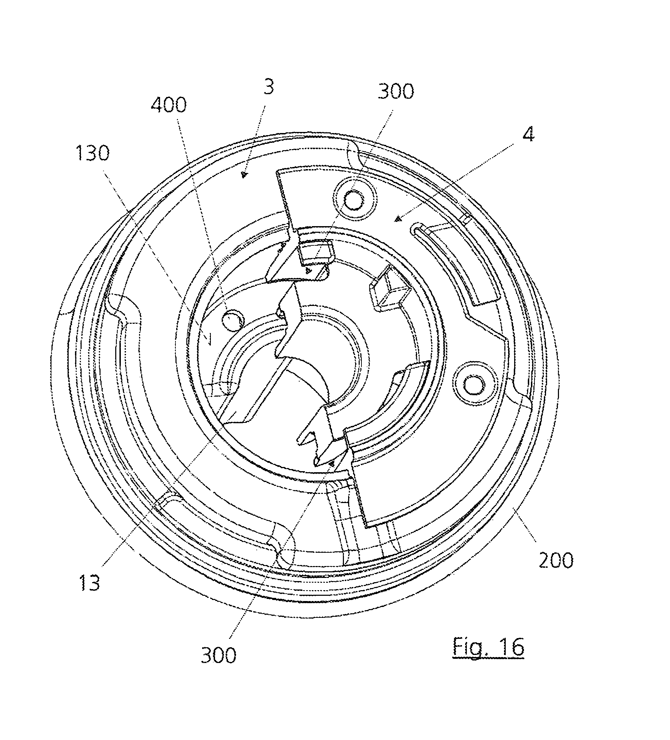

Fig. 15 zeigt eine Darstellung, bei der der in den Figuren 19 und 20 dargestellte Einfüllstutzen 4 in den Einfüllstutzenhalter 3 eingeschrumpft ist. Dabei ist vorgesehen, dass einer der beiden Entlüftungskanäle 300 des Einfüllstutzens 4 in Axialrichtung betrachtet nicht durch einen Vorsprung 13 verdeckt wird, während der andere Entlüftungskanal 300 von dem in Fig. 14 dargestellten Vorsprung 13 bzw. der dadurch gebildeten Fläche 130 verdeckt ist. Selbstverständlich können auch mehr oder weniger Entlüftungskanäle 300 oder Vorsprünge 13 vorgesehen sein. Eine Schnittdarstellung der in Fig. 15 dargestellten Einbausituation ist aus Fig. 16 ersichtlich. Hierin ist auch erkennbar, dass Luft unter Umströmung des Vorsprungs 13 in den von dem Vorsprung 13 verdeckten Entlüftungskanal 300 eindringen kann.

Der Erfinder hat erkannt, dass es von Vorteil ist, wenn der Entlüftungskanal 300, dessen, dem Innenraum des Behälter 1 zugewandtes Ende zuletzt von einem ansteigenden Flüssigkeitspegel verschlossen bzw. erreicht wird, wenigstens teilweise von dem Vorsprung 13 verdeckt ist.

Der Erfinder hat in nicht naheliegender Weise erkannt, dass die Gefahr am größten ist, dass aus dem Entlüftungskanal 300, der von einem ansteigenden Flüssigkeitspegel (beim Tanken) zuletzt verschlossen wird, Harnstoff herausspritzt. Es ist daher von Vorteil, wenn der Entlüftungskanal 300, der von dem ansteigenden Flüssigkeitspegel im Innenraum des Behälters zuletzt verschlossen wird, mit einem Spritzschutz versehen ist, der sich besonders einfach dadurch realisieren lässt, dass der ohnehin vorgesehene Vorsprung 13, welcher ein Herausfallen des Ringmagnets 7 vermeiden soll, diesen Entlüftungskanal 300 derart abdeckt, dass kein geradliniger bzw. axialer Durchgang in den Innenraum des Tanks vorhanden ist.

Selbstverständlich könnte ein derartiger Spritzschutz auch unabhängig von dem Vorsprung erreicht werden, beispielsweise durch einen hervorstehenden Lappen oder eine Ausbuchtung. Es hat sich in Versuchen jedoch besonders bewährt, den Vorsprung 13 hierzu zu verwenden.

Die in den Figuren 14 bis 20 dargestellten Entlüftungskanäle 300 weisen im Querschnitt betrachtet eine Kreisbogenform auf. Von Vorteil ist es, wenn die Kreisbogenform des Entlüftungskanals 300, welcher durch den Vorsprung 13 verschlossen werden soll, wenigstens annähernd an die Fläche 130 des Vorsprungs 13 angepasst ist, so dass die Auflage 130 des Vorsprungs 13 den Entlüftungskanal 300 in Axialrichtung betrachtet wenigstens annähernd vollständig versperrt (siehe Fig. 15).

Wie sich aus den Figuren 14, 16, 17, 18 und 21 ergibt, ist es vorteilhaft, wenn der Vorsprung 13 mit einer Entlüftungsbohrung 400 versehen ist. Die Entlüftungsbohrung 400 ist dabei derart angeordnet, dass diese eine Verbindung zwischen dem Entlüftungskanal 300 und einem Luftraum 500 im Behalter herstellt, welcher sich oberhalb des innenraumseitigen Endes des Einfüllstutzenhalters befindet.

Die Entlüftungsbohrung 400 ermöglicht es, dass sich das Luftvolumen, welches im Innenraum des Behälters eingeschlossen ist, sobald der Flüssigkeitspegel im Behälter so hoch steht, dass ein dem Innenraum zugewandtes Ende des Einfüllstutzenhalters 3 vollständig verschlossen ist, sich nach außen entspannen kann.

Die Entlüftungsbohrung 400 kann beispielsweise einen Durchmesser von 1 mm bis 10 mm, vorzugsweise 5 mm +- 2 mm, aufweisen. Diese Dimensionierung hat sich als besonders geeignet herausgestellt, um ein Entweichen von Luft zu ermöglichen, jedoch ein Herausspritzen von Harnstoff soweit wie möglich zu vermeiden.

Wie sich insbesondere aus den Figuren 14 bis 20, aber auch aus den Figuren 1 bis 10 ergibt, bildet der Einfüllstutzen 4 einen ringförmigen Freiraum 600 aus, der den Ringraum 6 für den Magnet 7 außenseitig umfasst. Dieser ringförmige Freiraum 600 ist in Richtung auf den Innenraum des Behälters nach unten offen, so dass Luft in den ringförmigen Freiraum 600 eindringen kann. Der ringförmige Freiraum 600 steht dabei derart in Verbindung mit den Entlüftungskanälen 300, dass ein Luftstrom gebildet werden kann, der es der Luft im Behälter beim Betanken des Behälters ermöglicht, durch die Entlüftungskanäle 300 nach außen zu strömen. Um ein möglichst vorteilhaftes Ausströmen von Luft zu ermöglichen, ist es besonders geeignet, wenn die Entlüftungskanäle 300 axial direkt in den Innenraum des Behälters münden, ohne dass eine Sperre bzw. ein Hindernis in Axialrichtung vorhanden ist. Wie vorstehend bereits beschrieben, hat es sich jedoch als vorteilhaft herausgestellt, wenn der vom Flüssigkeitspegel zuletzt verschlossene Entlüftungskanal 300 durch den Vorsprung 13 in Axialrichtung blockiert bzw. verdeckt ist.

Die in den Figuren 14 bis 20 dargestellte Möglichkeit, den Einfüllstutzen 4 gegebenenfalls unter Zuhilfenahme von Schrauben 22 mit dem Einfüllstutzenhalter 3 zu verschrauben, ist optional.

In nicht näher dargestellter Weise kann eine ringförmige Haube vorgesehen sein, welche den Einfüllstutzenhalter 3 inklusive der flanschartigen Erweiterung 21 des Einfüllstutzens 4 verdeckt und dabei jedoch eine Öffnung zum Einführen der Zapfpistole 5 freihält. Mittels einer Bajonettverbindung oder einer anderen Verbindung kann ein Deckel auf den Einfüllstutzenhalter 3 bzw. den Einfüllstutzen aufgesetzt bzw. aufgeschraubt werden. Hierzu kann der Einfüllstutzen optional Verschlussglieder 700 aufweisen.

## Patentansprüche

1. Behälter zur Aufnahme eines Kraft- und/oder Betriebsstoffes für Fahrzeuge, mit einem Einfüllstutzen (4) zur Aufnahme einer Zapfpistole und mit einem Magneten (7) zur Einwirkung auf einen Schließmechanismus einer Zapfpistole, **dadurch gekennzeichnet, dass** der Behälter (1) aus einem Kunststoff gebildet ist und einen einstückig mit dem Behälter (1) ausgebildeten Einfüllstutzenhalter (3) aufweist, in welchem der Einfüllstutzen (4) eingeschrumpft ist, wobei der Einfüllstutzen (4) einen Ringraum (6) ausbildet, in welchem der Magnet (7) verliersicher aufgenommen ist.

2. Behälter nach Anspruch 1, **dadurch gekennzeichnet, dass** die Schrumpfverbindung dadurch ausgebildet ist, dass der Einfüllstutzen (4) in den Einfüllstutzenhalter (3) eingesetzt ist, bevor dieser nach dessen Formgebungsprozess abgekühlt ist.

3. Behälter nach Anspruch 1 oder 2, **dadurch gekennzeichnet, dass** der Einfüllstutzen (4) in einem gekühlten Zustand in den Einfüllstutzenhalter (3) eingesetzt ist.

4. Behälter nach einem der vorherigen Ansprüche, **dadurch gekennzeichnet, dass** der Magnet (7) in dem Ringraum (6) durch Verclipsen, Verrasten, Verklemmen, Einpressen, Verschweißen oder Verkleben gehalten ist.

5. Behälter nach einem der vorherigen Ansprüche **dadurch gekennzeichnet, dass** der Ringraum (6) nach unten in Richtung des Innenraums des Behälters (1) offen ist.

6. Behätter nach Anspruch 5, **dadurch gekennzeichnet, dass** der Einfüllstutzenhalter (3) wenigstens eine Verjüngungsstufe und/oder wenigstens einen Vorsprung (13) aufweist, welcher derart ausgebildet ist, dass, wenn der Einfüllstutzen (4) in den Einfüllstutzenhalter (3) eingesetzt ist, sich die Verjüngungsstufe und/oder der Vorsprung (13) unterhalb des Ringraums (6) befinden, wobei die Verjüngungsstufe und/oder der Vorsprung (13) den zur Verfügung stehenden freien Innendurchmesser des Einfüllstutzenhalters (3) wenigstens in einem Teilbereich derart reduziert, dass der Innendurchmesser des Einfüllstutzenhalters (3) geringer ist als der Außendurchmesser des Magneten (7).

7. Behälter nach einem der vorherigen Ansprüche, **dadurch gekennzeichnet, dass** der Einfüllstutzenhalter (3) an seiner Innenwandung einen Endanschlag (14) ausbildet, an welchem eine Anlagefläche (15) des Einfüllstutzens (4) anliegt, wenn der Einfüllstutzen (4) in der vorgesehenen Position innerhalb des Einfüllstutzenhalters (3) positioniert ist.

8. Behälter nach einem der vorherigen Ansprüche, **dadurch gekennzeichnet, dass** der Einfüllstutzen (4) an seinem Außenumfang (18) wenigstens eine ringförmig umlaufende Rippe (16) bzw. einen Vorsprung aufweist, welcher in die Innenwand (3a) des Einfüllstutzenhalters (3) einschrumpfbar ist.

9. Behälter nach Anspruch 8, **dadurch gekennzeichnet, dass** die Unterseite der untersten ringförmig umlaufenden Rippe (16) als Anlagefläche (15) zur Anlage an dem Endanschlag (14) des Einfüllstutzenhalters (3) ausgebildet ist.

10. Behälter nach einem der vorherigen Ansprüche, **dadurch gekennzeichnet, dass** in den den Magneten (7) umgebenden Wandungen (8, 10) des Ringraums (6) Schlitze (11,12), Einschnitte, Kanäle oder Kerben eingebracht sind.

11. Behälter nach Anspruch 10, **dadurch gekennzeichnet, dass** die Schlitze (11,12), Einschnitte, Kanäle oder Kerben so angeordnet sind, dass der Magnet (7) an seiner Innenseite und seiner Außenseite von der im Behälter (1) eingebrachten Flüssigkeit umspülbar ist.

12. Behälter nach einem der vorherigen Ansprüche, **dadurch gekennzeichnet, dass** der Kunststoffbehälter (1) Teil eines Nutzfahrzeugtanks ist.

13. Behälter nach einem der vorherigen Ansprüche, **dadurch gekennzeichnet, dass** der Kunststoffbehälter (1) den Innenraum eines metallischen Nutzfahrzeugtanks bildet.

14. Behälter nach einem der vorherigen Ansprüche, **dadurch gekennzeichnet, dass** der Kunststoffbehälter (1) durch Sintern in einer metallischen Außenhaut (2) eines Nutzfahrzeugtanks hergestellt ist.

15. Behätter nach Anspruch 14, **dadurch gekennzeichnet, dass** der Kunststoffbehälter (1) durch Rotationssintern in der metallischen Außenhaut (2) hergestellt ist.

16. Behälter nach einem der vorherigen Ansprüche, **dadurch gekennzeichnet, dass** der Kunststoffbehälter (1) als Kunststoffbeschichtung bzw. als Kunststoffinnenbeschichtung eines Nutzfahrzeugtanks ausgebildet ist.

17. Behälter nach einem der vorherigen Ansprüche, **dadurch gekennzeichnet, dass** der Einfüllstutzen (4) wenigstens einen Entlüftungskanal (300) aufweist, dessen auf den Innenraum des Behälters (1) ausgerichtetes Ende wenigstens teilweise von der Verjüngungsstufe (13) des Einfüllstutzenhalters (3) verdeckt ist, wobei die Verjüngungsstufe (13) mit einem axialen Abstand unterhalb des Endes des Entlüftungskanals (300) angeordnet ist.

18. Kraftstofftank (100) für Nutzfahrzeuge, mit wenigstens einem ersten Aufnahmeraum (101) für einen Kraftstoff und einem zweiten Aufnahmeraum (102) für einen zweiten Kraftstoff oder einen Betriebsstoff oder eine Betriebsstoffkomponente, **dadurch geken nzeichnet** , dass der zweite Aufnahmeraum (102) durch einen Behälter (1) nach einem der vorherigen Ansprüche gebildet ist, wobei der Behälter (1) mit dem ersten Aufnahmeraum (101) zu einer Einheit verbunden ist.

## Claims

1. Vessel for storing a fuel and/or operating medium for vehicles, having a filler neck (4) for receiving a pump nozzle and having a magnet (7) for acting on a closing mechanism of a pump nozzle,
**characterized in that**
the vessel (1) is formed from a plastic and has a filler neck holder (3) formed in one piece with the vessel (1), which filler neck holder is shrink-fitted onto the filler neck (4), wherein the filler neck (4) forms an annular chamber (6) in which the magnet (7) is captively accommodated.

2. Vessel according to Claim 1,
**characterized in that**
the shrink-fit connection is formed by virtue of the filler neck (4) being inserted into the filler neck holder (3) before the latter is cooled after its shaping process.

3. Vessel according to Claim 1 or 2, **characterized in that** the filler neck (4) is inserted in a cooled state into the filler neck holder (3).

4. Vessel according to one of the preceding claims,
**characterized in that**
the magnet (7) is held in the annular chamber (6) by being clipped, latched, clamped, pressed in, welded or adhesively bonded.

5. Vessel according to one of the preceding claims,
**characterized in that**
the annular chamber (6) is open downwardly in the direction of the interior space of the vessel (1).

6. Vessel according to Claim 5,
**characterized in that**
the filler neck holder (3) has at least one narrowing step and/or at least one projection (13) which is designed such that, when the filler neck (4) is inserted into the filler neck holder (3), the narrowing step and/or the projection (13) are/is situated below the annular chamber (6), wherein the narrowing step and/or the projection (13) reduces the available free inner diameter of the filler neck holder (3), such that the inner diameter of the filler neck holder (3) is smaller than the outer diameter of the magnet (7), at least in a partial region.

7. Vessel according to one of the preceding claims,
**characterized in that**
the filler neck holder (3) forms, on its inner wall, an end stop (14) against which a contact surface (15) of the filler neck (4) bears when the filler neck (4) is situated in the intended position within the filler neck holder (3).

8. Vessel according to one of the preceding claims,
**characterized in that**
the filler neck (4) has, on its outer circumference (18), at least one annularly encircling rib (16) or a projection onto which the inner wall (3a) of the filler neck holder (3) can be shrink-fitted.

9. Vessel according to Claim 8,
**characterized in that**
the underside of the lowermost annularly encircling rib (16) is formed as a contact surface (15) for contact against the end stop (14) of the filler neck holder (3).

10. Vessel according to one of the preceding claims,
**characterized in that**
slots (11, 12), incisions, channels or notches are formed into the walls (8, 10), which surround the magnet (7), of the annular chamber (6).

11. Vessel according to Claim 10,
**characterized in that**
the slots (11, 12), incisions, channels or notches are arranged such that the liquid accommodated in the vessel (1) can wash around the magnet (7) at the inside and the outside thereof.

12. Vessel according to one of the preceding claims,
**characterized in that**
the plastic vessel (1) is part of a utility vehicle tank.

13. Vessel according to one of the preceding claims,
**characterized in that**
the plastic vessel (1) forms the interior space of a metallic utility vehicle tank.

14. Vessel according to one of the preceding claims,
**characterized in that**
the plastic vessel (1) is produced by sintering in a metallic outer skin (2) of a utility vehicle tank.

15. Vessel according to Claim 14,
**characterized in that**
the plastic vessel (1) is produced by rotary sintering in the metallic outer skin (2).

16. Vessel according to one of the preceding claims,
**characterized in that**
the plastic vessel (1) is formed as a plastic coating or as a plastic internal coating of a utility vehicle tank.

17. Vessel according to one of the preceding claims,
**characterized in that**
the filler neck (4) has at least one ventilation duct (300), that end of which ventilation duct which is directed toward the interior space of the vessel (1) is at least partially covered by the narrowing step (13) of the filler neck holder (3), wherein the narrowing step (13) is arranged at an axial distance below the end of the ventilation duct (300).

18. Fuel tank (100) for utility vehicles, having at least one first storage chamber (101) for a fuel and one second storage chamber (102) for a second fuel or an operating medium or an operating medium component,
**characterized in that**
the second storage chamber (102) is formed by a vessel (1) according to one of the preceding claims, wherein the vessel (1) is connected to the first storage chamber (101) so as to form a unit.

## Revendications

1. Récipient pour recevoir un carburant et/ou un fluide de service consommable pour véhicules, comprenant une tubulure de remplissage (4) pour recevoir un pistolet de remplissage et comprenant un aimant (7) pour agir sur un mécanisme de fermeture d'un pistolet de remplissage, **caractérisé en ce que** le récipient (1) est formé d'un plastique et présente un dispositif de retenue de tubulure de remplissage (3) réalisé d'une seule pièce avec le récipient (1), dans lequel dispositif de retenue est emmanchée à chaud la tubulure de remplissage (4), la tubulure de remplissage (4) constituant un espace annulaire (6) dans lequel l'aimant (7) est reçu de manière imperdable.

2. Récipient selon la revendication 1, **caractérisé en ce que** la liaison par emmanchement à chaud est réalisée de telle sorte que la tubulure de remplissage (4) soit insérée dans le dispositif de retenue de tubulure de remplissage (3) avant que celle-ci ne soit refroidie après son processus de formage.

3. Récipient selon la revendication 1 ou 2, **caractérisé en ce que** la tubulure de remplissage (4) est insérée dans un état refroidi dans le dispositif de retenue de tubulure de remplissage (3).

4. Récipient selon l'une quelconque des revendications précédentes, **caractérisé en ce que** l'aimant (7) est maintenu dans l'espace annulaire (6) par enclipsage, emboîtement, serrage, pressage, soudage ou collage.

5. Récipient selon l'une quelconque des revendications précédentes, **caractérisé en ce que** l'espace annulaire (6) est ouvert vers le bas dans la direction de l'espace interne du récipient (1).

6. Récipient selon la revendication 5, **caractérisé en ce que** le dispositif de retenue de tubulure de remplissage (3) présente au moins un gradin de rétrécissement et/ou au moins une saillie (13), qui est réalisée de telle sorte que lorsque la tubulure de remplissage (4) est insérée dans le dispositif de retenue de tubulure de remplissage (3), le gradin de rétrécissement et/ou la saillie (13) se trouvent en dessous de l'espace annulaire (6), le gradin de rétrécissement et/ou la saillie (13) réduisant le diamètre intérieur libre disponible du dispositif de retenue de tubulure de remplissage (3) au moins dans une région partielle de telle sorte que le diamètre intérieur du dispositif de retenue de tubulure de remplissage (3) soit plus petit que le diamètre extérieur de l'aimant (7).

7. Récipient selon l'une quelconque des revendications précédentes, **caractérisé en ce que** le dispositif de retenue de tubulure de remplissage (3) constitue, au niveau de sa paroi intérieure, une butée de fin de course (14) au niveau de laquelle s'applique une surface d'appui (15) de la tubulure de remplissage (4) lorsque la tubulure de remplissage (4) est positionnée dans la position prévue à l'intérieur du dispositif de retenue de tubulure de remplissage (3).

8. Récipient selon l'une quelconque des revendications précédentes, **caractérisé en ce que** la tubulure de remplissage (4) présente au niveau de sa périphérie extérieure (18) au moins une bride (16) ou une saillie, qui peut être emmanchée à chaud dans la paroi intérieure (3a) du dispositif de retenue de tubulure de remplissage (3).

9. Récipient selon la revendication 8, **caractérisé en ce que** le côté inférieur de la bride (16) périphérique de forme annulaire la plus inférieure est réalisé sous forme de surface d'appui (15) pour l'appui contre la butée de fin de course (14) du dispositif de retenue de tubulure de remplissage (3).

10. Récipient selon l'une quelconque des revendications précédentes, **caractérisé en ce que** des fentes (11, 12), des entailles, des canaux ou des encoches sont pratiqués dans les parois (8, 10) de l'espace annulaire (6) entourant l'aimant (7).

11. Récipient selon la revendication 10, **caractérisé en ce que** les fentes (11, 12), les entailles, les canaux ou les encoches sont disposés de telle sorte que l'aimant (7) puisse être enveloppé par l'écoulement de liquide introduit dans le récipient (1) au niveau de son côté intérieur et de son côté extérieur.

12. Récipient selon l'une quelconque des revendications précédentes, **caractérisé en ce que** le récipient en plastique (1) fait partie d'un réservoir d'un véhicule utilitaire.

13. Récipient selon l'une quelconque des revendications précédentes, **caractérisé en ce que** le récipient en plastique (1) forme l'espace intérieur d'un réservoir métallique d'un véhicule utilitaire.

14. Récipient selon l'une quelconque des revendications précédentes, **caractérisé en ce que** le récipient en plastique (1) est fabriqué par frittage dans une peau extérieure métallique (2) d'un réservoir de véhicule utilitaire.

15. Récipient selon la revendication 14, **caractérisé en ce que** le récipient en plastique (1) est fabriqué par frittage rotatif dans la peau extérieure métallique (2).

16. Récipient selon l'une quelconque des revendications précédentes, **caractérisé en ce que** le récipient en plastique (1) est réalisé sous forme de revêtement en plastique ou sous forme de revêtement intérieur en plastique d'un réservoir de véhicule utilitaire.

17. Récipient selon l'une quelconque des revendications précédentes, **caractérisé en ce que** la tubulure de remplissage (4) présente au moins un canal de désaérage (300), dont l'extrémité orientée vers l'espace interne du récipient (1) est recouverte au moins en partie par le gradin de rétrécissement (13) du dispositif de retenue de tubulure de remplissage (3), le gradin de rétrécissement (13) étant disposé à distance axiale sous l'extrémité du canal de désaérage (300).

18. Réservoir de carburant (100) pour véhicules utilitaires, comprenant au moins un premier espace de réception (101) pour un carburant et un deuxième espace de réception (102) pour un deuxième carburant ou un fluide de service consommable ou un composant d'un fluide de service consommable, **caractérisé en ce que** le deuxième espace de réception (102) est formé par un récipient (1) selon l'une quelconque des revendications précédentes, le récipient (1) étant connecté au premier espace de réception (101) pour former une unité.
